# EUROPÄISCHE PATENTANMELDUNG

(11) **EP 3 698 947 A1**
(43) Veröffentlichungstag der Anmeldung: **26.08.2020**
(21) Anmeldenummer: 19158124.8
(22) Anmeldetag: 19.02.2019
(51) Int. Cl.: B29C 64/393, B29C 64/153, B29C 64/268, B33Y 10/00, B33Y 30/00, B33Y 50/02, B23K 26/03, B22F 3/105

(54) **ÜBERWACHUNG UND PROZESSREGELUNG EINER ADDITIVEN FERTIGUNG EINES WERKSTÜCKS**

(71) Anmelder: Siemens Aktiengesellschaft, 80333 München (DE)
(72) Erfinder: Die Erfindernennung liegt noch nicht vor

(57) **Zusammenfassung**

Um eine Echtzeitüberwachung eines Schreibprozesses bei einer additiven Fertigung zu ermöglichen wird eine Vorrichtung zur additiven Fertigung eines Werkstücks angegeben. Eine Abtasteinheit (2) ist dazu eingerichtet, einen Schmelzstrahl (3) auf einen Schreibpunkt (4) zu lenken. Die Vorrichtung weist außerdem einen ortsauflösenden optischen Detektor (5), eine Steuereinheit (6) und eine Abbildungseinheit (7) auf. Die Abbildungseinheit (7) ist dazu eingerichtet, einen Teilbereich (8) der Schreibfläche (1) auf den Detektor (5) abzubilden. Die Steuereinheit (6) ist dazu eingerichtet, die Vorrichtung anzusteuern, um eine Position des Teilbereichs (8) während der Fertigung zu verändern.

## Beschreibung

Die Erfindung betrifft eine Vorrichtung zur additiven Fertigung eines Werkstücks, die eine Abtasteinheit aufweist, welche dazu eingerichtet ist, einen Schmelzstrahl, auch Schreibstrahl genannt, auf einen Schreibpunkt auf einer Schreibfläche zu lenken, sowie einen optischen Detektor, eine Steuereinheit und eine Abbildungseinheit. Die Erfindung betrifft außerdem ein Verfahren zur Überwachung einer additiven Fertigung eines Werkstücks, sowie ein Verfahren zur Prozessregelung einer additiven Fertigung eines Werkstücks und ein entsprechendes Computerprogramm.

Das Dokument US 2016/0184893 A1 beschreibt ein Monitoring von Prozessen der additiven Fertigung, insbesondere beim örtlichen Laserschmelzen, mittels eines Pyrometers oder einer Fotodiode.

Bei bekannten Verfahren zur Überwachung eines additiven Fertigungsverfahrens ist es häufig schwierig oder unmöglich, Defekte oder Störstellen zu erkennen, die den Schreibprozess bereits beeinträchtigen.

Vor diesem Hintergrund ist es Aufgabe der vorliegenden Erfindung, ein verbessertes Konzept zur additiven Fertigung eines Werkstücks anzugeben, das eine Echtzeitüberwachung des Schreibprozesses ermöglicht, um Defekte oder Fehlstellen bereits während des Schreibprozesses erkennen zu können.

Erfindungsgemäß wird diese Aufgabe durch eine Vorrichtung, Verfahren zur Überwachung und Prozesssteuerung und ein Computerprogramm gemäß der unabhängigen Patentansprüche gelöst. Vorteilhafte Weiterbildungen und Ausführungsformen sind Gegenstand der abhängigen Ansprüche.

Das verbesserte Konzept beruht auf der Idee, einen ortsauflösenden Detektor zur Überwachung einer Schreibfläche vorzusehen und eine Position eines mittels des Detektors beobachteten Teilbereichs der Schreibfläche dynamisch während der Fertigung zu verändern.

Gemäß einem ersten unabhängigen Aspekt des verbesserten Konzepts wird eine Vorrichtung zur additiven Fertigung eines Werkstücks angegeben. Die Vorrichtung weist eine Abtasteinheit auf, die dazu eingerichtet ist, einen Schmelzstrahl auf einen Schreibpunkt auf einer Schreibfläche zu lenken. Die Vorrichtung weist außerdem einen optischen Detektor, eine Steuereinheit und eine Abbildungseinheit auf. Der Detektor ist als ortsauflösender Detektor ausgebildet und die Abbildungseinheit ist dazu eingerichtet und angeordnet, einen Teilbereich der Schreibfläche wenigstens zweidimensional mittels des Detektors abzubilden. Die Steuereinheit ist dazu eingerichtet, die Vorrichtung, insbesondere die Abbildungseinheit oder die Abtasteinheit, anzusteuern, um eine Position des Teilbereichs während der Fertigung zu verändern.

Bei dem Schmelzstrahl kann es sich beispielsweise um einen Lichtstrahl, insbesondere um einen Laserstrahl, einen Elektronenstrahl oder einen sonstigen Energiestrahl handeln, der zur additiven Fertigung, insbesondere zur selektiven additiven Fertigung, geeignet ist.

Bei der Schreibfläche kann es sich beispielsweise um eine Oberfläche oder einen Teil der Oberfläche eines Pulverbetts handeln, aus dem das Werkstück gefertigt wird. Die Schreibfläche kann einen Teil der Pulverbettoberfläche beinhalten und einen Teil einer Werkstückoberfläche. Bei der Schreibfläche kann es sich auch um die Werkstückoberfläche oder einen Teil er Werkstückoberfläche handeln, beispielsweise bei Fertigungsverfahren ohne Pulverbett, bei denen beispielsweise Material direkt auf die Werkstückoberfläche aufgetragen und verschmolzen wird.

Bei der additiven Fertigung kann es sich um ein additives Fertigungsverfahren, insbesondere ein selektives additives Fertigungsverfahren, beispielsweise ein Elektronenstrahlschmelzen, ein örtliches Laserschmelzen (Englisch: "selective laser melting", SLM) oder ein örtliches Lasersintern (Englisch: "selective laser sintering", SLS) handeln.

Bei dem Detektor kann es sich beispielsweise um eine Kamera, einen Kameradetektor oder Kamerasensor handeln oder eine Kamera kann den Detektor beinhalten.

Dass der Detektor als ortsauflösender Detektor ausgebildet ist kann bedeuten, dass der Detektor mehrere Pixel aufweist, insbesondere ein Array aus Pixeln. Beispielsweise kann der Detektor mehrere 1.000 Pixel, insbesondere ein Array mit einer Anzahl von Pixeln im Bereich von 100.000 Pixeln bis 10.000.000 Pixeln enthalten.

Durch die Verwendung eines solchen ortsauflösenden Detektors kann der Teilbereich schnell, hochauflösend und mit hoher Qualität abgebildet werden.

Die Abbildung des Teilbereichs auf dem Detektor erfolgt beispielsweise im sichtbaren und/oder Infrarotbereich. Entsprechend ist der Detektor im sichtbaren und/oder Infrarotbereich empfindlich.

Hier und im Folgenden kann der Begriff "Licht" derart verstanden werden, dass davon elektromagnetische Wellen im sichtbaren Bereich, im Infrarotbereich und/oder im ultravioletten Bereich umfasst sind. Dementsprechend kann der Begriff "optisch" derart verstanden werden, dass er sich auf Licht nach diesem Verständnis bezieht.

Die Abtasteinheit, welche auch Scaneinheit oder Ablenkeinheit genannt werden kann, dient insbesondere dazu, den Schmelzstrahl in einer kontrollierten Weise abzulenken und damit den Schreibpunkt auf der Schreibfläche zu steuern um die selektive Fertigung des Werkstücks gemäß einem definierten Arbeitsauftrag, insbesondere gemäß einem definierten Arbeitsprogramm, durchzuführen.

Bei der zweidimensionalen Abbildung des Teilbereichs kann es sich um eine zweidimensionale Abbildung handeln. Insbesondere ist eine Oberfläche des Teilbereichs nicht notwendigerweise eben oder flach, was dazu führen kann, dass im Teilbereich unterschiedliche Höhen beispielsweise des Pulverbetts, also eine Topografie gegeben ist.

Die wenigstens zweidimensionale Abbildung des Teilbereich kann auch als zweieinhalbdimensionale Abbildung verstanden werden, in dem Sinn, dass neben Koordinaten, welche in einer Grundebene der Schreibfläche oder des Pulverbetts liegen, auch zugehörige Topografieinformationen, also Höheninformationen durch die Abbildung auf den Detektor erfasst werden. Dabei kann der Begriff "zweieinhalbdimensional" derart verstanden werden, dass die dritte Dimension als Attribut oder Funktion den zweidimensionalen Ebenenkoordinaten verfügbar ist. Zu jedem Paar kartesischer Ebenenkoordinate existiert in einem zweieinhalbdimensionalen Modell genau eine Höhenkoordinate. Somit können beispielsweise senkrechte Wände oder Überhänge oder Hohlräume, welche eine vollständige 3D-Abbildung erfordern würde, mit einer zweidimensionalen Abbildung nicht erfasst werden.

Bei der wenigstens zweidimensionalen Abbildung Teilbereich kann es sich auch um eine dreidimensionale Abbildung handeln.

Gemäß zumindest einer Ausführungsform deckt der Teilbereich nicht die gesamte Schreibfläche oder das gesamte Pulverbett ab. Der Teilbereich ist also kleiner als ein gesamter Arbeitsbereich. Dadurch werden die erzielbare Ortsauflösung und die entsprechende Abbildungs- und Bildqualität weiter erhöht.

Die Position des Teilbereichs kann angesteuert durch die Steuereinheit verändert werden, indem eine Ablenkung von Abbildungsstrahlen oder Abbildungslicht zur Abbildung des Teilbereichs durch die Abtasteinheit synchron mit dem Schmelzstrahl abgelenkt wird. Dies ist beispielsweise in Ausführungsformen der Fall, bei denen der Abbildungsstrahl beziehungsweise das Abbildungslicht in einen Strahlengang des Schmelzstrahls eingekoppelt wird.

Alternativ oder zusätzlich kann das Verändern der Position des Teilbereichs angesteuert durch die Abbildungseinheit erfolgen, insbesondere angesteuert durch die Steuereinheit, beispielsweise in Ausführungsformen in denen die Kamera ein eigenes dynamisches System zur Veränderung ihres Bildbereichs beinhaltet.

Gemäß verschiedenen Ausführungsformen werden die beschriebenen Schritte des Verfahrens nach dem Verändern der Position des Teilbereichs wiederholt. Dadurch wird eine Überwachung der Schreibfläche, insbesondere eines Bereichs um den Schreibpunkt herum, unmittelbar zur Zeit der Fertigung, also in Echtzeit, auch als "online" Überwachung bezeichnet, ermöglicht.

Gemäß verschiedener Ausführungsformen liegt der Schreibpunkt innerhalb des Teilbereichs, insbesondere liegt der Schreibpunkt während der additiven Fertigung immer in dem Teilbereich, das bedeutet, der Teilbereich wird derart verändert, dass er einer Bewegung der Schreibpunkts folgt oder umgekehrt.

Durch die ortsaufgelöste Beobachtung und Abbildung des im Vergleich zur gesamten Schreibfläche beschränkten Teilbereichs und durch die dynamisch Veränderung der Position des Teilbereichs werden qualitativ hochwertige Aufnahmen relevanter Bereiche auf der Schreibfläche, insbesondere Bereiche um den Schreibpunkt herum, in Echtzeit oder nahezu in Echtzeit während der Fertigung aufgenommen und zur Verfügung gestellt. Diese Aufnahmen können zur Bewertung oder Überwachung des Fertigungsfortschritts, der Fertigungsqualität oder sonstiger Fertigungsparameter herangezogen werden, insbesondere visuelle und/oder thermische Bewertung. Die Bewertung kann beispielsweise durch Menschen oder computergestützt oder vollautomatisch erfolgen.

Durch die Verwendung eines ausgedehnten Arrays an Pixeln ist eine schnellere und effizientere Abbildung relevanter Bereiche möglich als dies beispielsweise bei einem punktförmigen Detektor der Fall wäre, was schlussendlich die Echtzeitbeobachtung oder näherungsweise Echtzeitbeobachtung erst ermöglicht.

Die Bewertung der additiven Fertigung kann beispielsweise das Beobachten oder Identifizieren von Defekten oder möglichen Defekten oder von Fehlstellen, insbesondere unmittelbar vor dem Schreibpunkt, umfassen. Das Bewerten oder Beobachten kann auch ein Erkennen von Erhebungen, Defekten, Spritzern, Debris und so weiter auf der Schreibfläche beinhalten, wobei diese beispielsweise beim Fertigungsprozess oder einem nachfolgenden Beschichtungsprozess entstehen können. Insbesondere können sie bei einem früheren Schreibprozess benachbarter Strukturen in der Umgebung des aktuellen Schreibpunkts entstanden sein. Gemäß dem verbesserten Konzept kann adäquat auf solche Störungen und Fehlstellen eingegangen und reagiert werden.

Insbesondere kann mittels einer Vorrichtung gemäß dem verbesserten Konzept die Bewertung oder Beobachtung des Fertigungsprozesses dahingehend genutzt werden, dass in einem auf die Fertigung folgenden oder von der Fertigung beinhalteten Beschichtungsprozess Erhebungen und sonstige Fehler oder Störstellen berücksichtigt werden.

Gemäß zumindest einer Ausführungsform der Vorrichtung weist die Abtasteinheit einen Strahlteiler auf, der auf einer Eingangsseite der Abtasteinheit in einem Strahlengang des Schmelzstrahls angeordnet ist.

Die Abtasteinheit weist dabei eine Eingangsseite und insbesondere eine Ausgangsseite auf, wobei die Eingangsseite einer Quelle des Schmelzstrahls, also insbesondere einer Heiz-, Schreib-, Strahl-, Elektronen- oder Laserquelle zugewandt ist, während die Ausgangsseite der Schreibfläche oder dem Pulverbett und dem Werkstück zugewandt ist. Solche Ausführungsformen eignen sich insbesondere für Verfahren, bei denen der Schmelzstrahl ein Laserstrahl ist, beispielsweise für SLS oder SLM-Verfahren.

Der Strahlteiler ist insbesondere derart angeordnet, dass Abbildungslicht, welches von der Schreibfläche über die Ablenkeinheit auf den Strahlteiler trifft, wenigstens teilweise aus dem Strahlengang des Schmelzstrahls ausgekoppelt und in Richtung des Detektors gelenkt wird.

Mit Vorteil wirkt die Abtasteinheit in analoger Weise wie sie auf den Schmelzstrahl wirkt auch auf das Abbildungslicht beziehungsweise den Abbildungsstrahl. Demzufolge ist der beobachtete Teilbereich immer gekoppelt an den Schmelzstrahl, insbesondere den Schreibpunkt.

In verschiedenen Ausführungsformen befindet sich der Schreibpunkt insbesondere in einem Zentrum oder näherungsweise in einem Zentrum des Teilbereichs. Aufgrund der synchronen Ablenkung von Schmelzstrahl und Abbildungsstrahl ist die Kopplung des Teilbereichs an den Schmelzstrahl und den Schreibpunkt unabhängig von einer aktuellen Richtung oder Auslenkung des Schmelzstrahls oder einem entsprechenden Auslenkungszustand der Abtasteinheit.

Dies hat insbesondere den Vorteil, dass bei der Veränderung des Teilbereichs beziehungsweise der Position des Teilbereichs automatisch sichergestellt ist, dass der beobachtete Teilbereich relevant ist, insbesondere sich in einer unmittelbaren Umgebung des Schreibpunkts befindet, sodass insbesondere Punkte, die in dem Fertigungsprozess auf den aktuellen Schreibpunkt folgen, insbesondere unmittelbar auf den aktuellen Schreibpunkt, bereits in dem beobachteten Teilbereich liegen. Dadurch kann auf entsprechende Störungen oder Fehlstellen dynamisch und sehr schnell reagiert werden kann, insbesondere nahezu in Echtzeit.

Zudem ist kann eine Abbildungsqualität nahe am Zentrum des Arrays des Detektors am höchsten sein. Dies wird bei solchen Ausführungen entsprechend ausgenutzt.

Gemäß zumindest einer Ausführungsform beinhaltet die Vorrichtung einen Filter, insbesondere einen dichroitischen Filter, welcher an dem Strahlteiler und/oder zwischen dem Strahlteiler und dem Detektor angeordnet ist.

Dadurch kann eine Rückwirkung des Schmelzstrahls auf das Detektorbild minimiert oder ausgeschlossen werden.

Anstelle oder zusätzlich zu dem dichroitischen Filter können auch schmalbandige, insbesondere an eine Laserwellenlänge des Schmelzstrahls angepasste, Sperrfilter zum Einsatz kommen.

Falls es sich bei dem Schmelzstrahl um einen polarisierten Laserstrahl handelt, kann auch ein Polarisierungsfilter als Strahlteiler verwendet werden.

Gemäß zumindest einer Ausführungsform beinhaltet die Vorrichtung die Heizquelle, also insbesondere die Laserquelle oder die Elektronenstrahlquelle.

Gemäß zumindest einer Ausführungsform beinhaltet die Abtasteinheit einen oder mehrere Umlenkspiegel, die durch die Steuereinheit zum Lenken und Ablenken des Schmelzstrahls und in entsprechenden Ausführungsformen ebenfalls des Abbildungsstrahls und damit zum Verändern der Position des Teilbereichs dienen.

Gemäß zumindest einer Ausführungsform weist die Abbildungseinheit einen oder mehrere Aktuatoren auf, die dazu eingerichtet sind, zum Abbilden des Teilbereichs den Detektor und/oder ein Objektiv der Abbildungseinheit entsprechend einer Ablenkung des Schmelzstrahls durch die Abtasteinheit nachzuführen, insbesondere angesteuert durch die Steuereinheit.

Durch eine Bewegung des Schmelzstrahls während der Abbildung des Teilbereichs auf den Detektor kann es aufgrund der Strahlablenkung beispielsweise zur Verschmierung des Bildinhaltes beziehungsweise zu Bewegungsunschärfen kommen, welche auch als "Motion Blurring" bezeichnet werden können. Durch das Nachführen des Detektors oder des Objektivs kann dies zumindest teilweise kompensiert werden.

Gemäß zumindest einer Ausführungsform ist die Vorrichtung, insbesondere die Steuereinheit, dazu eingerichtet, die Abbildung des Teilbereichs zeitlich mit einer Ablenkung des Schmelzstrahls durch die Abtasteinheit derart zu koppeln, dass eine Bewegung des Schmelzstrahls während der Abbildung des Teilbereichs verhindert oder vermieden wird.

Dies stellt eine Alternative oder zusätzliche Möglichkeit zur Vermeidung von Bewegungsunschärfen dar.

Gemäß zumindest einer Ausführungsform weist die Vorrichtung eine Lichtfeldkamera oder eine plenoptische Kamera oder eine Vielfachaperturkamera auf, welche den Detektor beinhaltet.

Die Lichtfeldkamera kann in verschiedenen Ausführungsformen der Vorrichtung eine Hauptlinse und ein Array von Mikrolinsen, welches zwischen der Hauptlinse und dem Detektor angeordnet ist, beinhalten.

Das Array von Mikrolinsen kann einen entsprechenden Abbildungsstrahlengang in Subaperturen aufteilen. Für jede dieser Subaperturen entsteht dann beispielsweise auf dem Detektor ein getrenntes Bild mit einem leicht unterschiedlichen Blickwinkel aufgrund des räumlichen Versatzes der Mikrolinsen. Aus den leicht unterschiedlichen Teilbildern kann dann mittels Triangulationsmethoden die räumliche Struktur des Teilbereichs berechnet werden und es entstehen zweieinhalbdimensionale oder dreidimensionale Bilder.

Gemäß wenigstens einer Ausführung, weisen verschiedene Mikrolinsen des Arrays von Mikrolinsen unterschiedliche Brennweiten auf. Insbesondere können zwei oder drei Linsentypen mit unterschiedlichen Brennweiten für die Mikrolinsen eingesetzt werden. Dadurch kann eine Tiefenmessung weiter zu verbessert werden.

Im Unterschied zu herkömmlichen Triangulationen oder Lichtschnittverfahren, wie Streifenprojektion oder Lasertriangulation, bietet eine Lichtfeldkamera den Vorteil, dass eine unsymmetrische Vorprägung von Kanten, beispielsweise durch eine vorgegebene Triangulationsrichtung durch den Aufbau der Hardware, nicht gegeben ist.

Gemäß zumindest einer Ausführungsform weist die Lichtfeldkammera ein Objektiv mit der Hauptlinse auf, wobei das Objektiv über eine Fokussiervorrichtung verfügt.

Gemäß verschiedenen Ausführungsformen ist die Fokussiervorrichtung als Autofokusvorrichtung ausgeführt.

Gemäß verschiedener Ausführungsformen ist das Objektiv der Lichtfeldkamera als Zoomobjektiv ausgeführt, beispielsweise um die Vergrößerung beziehungsweise Auflösung in dem Teilbereich der Lichtfeldkamera einstellen zu können.

Durch den Einsatz der Lichtfeldkamera, insbesondere bei Ausführungsformen mit Mikrolinsen unterschiedlicher Brennweiten, kann ein größerer Tiefenschärfebereich erreicht werden. Dadurch kann eine Unschärfe, welche sich beispielsweise entlang einer Richtung einer Einfallsebene des Abbildungsstrahls ändert, teilweise oder vollständig kompensiert werden.

Gemäß zumindest einer Ausführungsform ist die Auswerteeinheit dazu eingerichtet, basierend auf dem wenigstens einen Detektorsignal wenigstens eine topografische Information des Teilbereichs zu bestimmen.

Die topografische Information kann dabei insbesondere aus einer mittels der Lichtfeldkamera erfassten Tiefeninformation oder zweieinhalbdimensionalen beziehungsweise dreidimensionalen Information bestimmt werden.

Gemäß zumindest einer Ausführungsform ist die Auswerteeinheit dazu eingerichtet, basierend auf dem wenigstens einen Detektorsignal eine Auslenkposition, insbesondere eine tatsächliche aktuelle Auslenkposition, des Schmelzstrahls zu bestimmen.

Gemäß zumindest einer Ausführungsform weist die Vorrichtung eine Fokussiereinheit auf, die insbesondere eine F-Theta Linse enthält. Die Fokussiereinheit ist zwischen der Abtasteinheit und der Schreibfläche oder dem Pulverbett angeordnet und dient zum Fokussieren des Schmelzstrahls auf den Schreibpunkt.

Da der Schmelzstrahl durch die Abtastung und Ablenkung mittels der Abtasteinheit die Fokussiereinheit, insbesondere die F-Theta Linse an unterschiedlichen Stellen mit unterschiedlichen Strahlenneigungen durchläuft, kann es zu geometrischen Abbildungsfehlern kommen, die insbesondere über ein Linsendesign nicht oder nicht vollständig ausgeglichen werden können.

Daher sind Ausführungsformen der Vorrichtung besonders vorteilhaft, mittels derer eine tatsächliche Auslenkposition des Schmelzstrahls bestimmen können. Dadurch können die Abbildungsfehler wenigstens teilweise kompensiert werden.

Im Allgemeinen steht der Schmelzstrahl nicht notwendigerweise senkrecht auf einer Ebene der Schreibfläche. Durch Einsatz der Lichtfeldkamera kann eine zweieinhalbdimensionale oder dreidimensionale Aufnahme des Teilbereichs erfolgen, die wiederum Rückschlüsse auf den Auslenkwinkel des Schmelzstrahls erlaubt, insbesondere durch Auswertung einer Verzerrung des Teilbereichs oder des Abbildes des Teilbereichs im Vergleich zu einem senkrechten Strahl ohne Ablenkung.

In verschiedenen Ausführungsformen weist die Vorrichtung ein Spektroskop und/oder ein Spektrometer auf, das dazu eingerichtet und angeordnet ist, von der Schreibfläche ausgehendes Licht zu erfassen und basierend darauf ein Spektrometersignal zu erzeugen, welches spektrometrische oder spektroskopische Informationen über das Licht beinhaltet.

Gemäß verschiedener Ausführungsformen kann die Vorrichtung einen oder mehrere Schallsensoren, insbesondere Körperschallsensoren oder Mikrofone, beinhalten. Der Schallsensor ist dabei mit dem Werkstück gekoppelt, also beispielsweise direkt an dem Werkstück angeordnet oder an einer Auflage, auf dem sich das Pulverbett oder das Werkstück befinden, angeordnet.

Mittels eines Schallsensors können beispielsweise Schallsignale erzeugt werden, die Informationen über während der Fertigung in dem Werkstück auftretende Risse, Spritzer und dergleichen beinhalten.

Gemäß verschiedener Ausführungsformen kann die Vorrichtung auch weitere Sensoren, beispielsweise Sensoren zur Messung einer mechanischen Spannung in dem Werkstück, beinhalten.

Gemäß zumindest einer Ausführungsform weist die Vorrichtung eine Beleuchtungseinrichtung auf, die dazu eingerichtet ist, den Teilbereich wenigstens teilweise zu beleuchten.

Die Beleuchtungseinrichtung kann dazu eingerichtet sein, die gesamte Schreibfläche oder das gesamte Pulverbett zu beleuchten. Die Beleuchtungseinrichtung kann alternativ oder zusätzlich eingerichtet sein, dynamisch veränderbar, beispielsweise gekoppelt mit einer Bewegung oder Veränderung des Teilbereichs, einen Beleuchtungsbereich zu beleuchten, der den Teilbereich beinhaltet oder teilweise beinhaltet.

Gemäß zumindest einer Ausführungsform ist die Beleuchtungseinrichtung, insbesondere angesteuert durch die Steuereinheit, dazu eingerichtet, den Beleuchtungsbereich zu verändern, insbesondere abhängig von einer Position oder der Veränderung des Teilbereichs, zu verändern.

Der Begriff "Beleuchtung" kann beispielsweise als Beleuchtung mit Licht, insbesondere sichtbarem Licht, verstanden werden. Eine Wellenlänge oder ein Wellenlängenbereich des Beleuchtungslichts oder des Lichts zur Beleuchtung ist beispielsweise abgestimmt auf eine Empfindlichkeit oder ein Empfindlichkeitsspektrum des Detektors.

Durch die Beleuchtung kann das für die Abbildung des Teilbereichs auf dem Detektor verfügbare Licht und damit eine Bildqualität der Abbildung verbessert werden.

Gemäß zumindest einer Ausführungsform kann die Beleuchtungseinrichtung die Beleuchtung ein- und abschalten.

Insbesondere können die Beleuchtungseinrichtung und/oder die Steuereinheit derart eingerichtet sein, dass die Beleuchtung während einer thermografischen Abbildung oder thermografischen Untersuchung oder Erfassung des Teilbereichs abgeschaltet wird.

Damit kann gewährleistet werden, dass die thermografische Erfassung nicht durch das Licht der Beleuchtungseinrichtung verfälscht wird.

Gemäß zumindest einer Ausführungsform kann das Licht zur Beleuchtung, also das Beleuchtungslicht und/oder ein Beleuchtungsstrahl, in den Strahlengang des Schmelzstrahls eingekoppelt werden. Dadurch kann die Position des Beleuchtungsbereichs an den Teilbereich gekoppelt werden, sodass eine Veränderung der Position des Beleuchtungsbereichs synchron zu einer Veränderung der Position des Teilbereichs erfolgen kann.

Gemäß zumindest einer Ausführungsform beinhaltet die Vorrichtung eine Optik zur Stahlformung, welche zwischen der Beleuchtungseinrichtung und der Abtasteinheit oder zwischen der Beleuchtungseinrichtung und der Schreibfläche oder dem Pulverbett angeordnet ist.

Gemäß zumindest einer Ausführungsform ist eine Lichtquelle der Beleuchtungseinrichtung derart angeordnet und eingerichtet, dass sie Licht zur Beleuchtung auf einer Eingangsseite der Abtasteinheit in einen Strahlengang des Schmelzstrahls einkoppeln kann.

Die Lichtquelle kann beispielsweise einen oder mehrere Laserquellen und/oder eine oder mehrere Leuchtdioden enthalten.

Die Lichtquellen können beispielsweise direkt in den Strahlengang des Schmelzstrahls einkoppeln, also in einer direkten Umgebung des Strahlengangs oder an einem Rand des Strahlengangs angeordnet sein.

Alternativ oder zusätzlich kann die Vorrichtung einen weiteren Strahlteiler enthalten, der zwischen dem Detektor und dem Strahlteiler zum Auskoppeln des Abbildungslichts oder Abbildungsstrahls angeordnet ist. Der weitere Strahlteiler ist insbesondere derart angeordnet, dass die Lichtquelle der Beleuchtungseinrichtung über den weiteren Strahlteiler und den Strahlteiler das Beleuchtungslicht oder den Beleuchtungsstrahl in den Strahlengang des Schmelzstrahls einkoppeln kann.

Gemäß zumindest einer Ausführungsform ist wenigstens eine weitere Lichtquelle der Beleuchtungseinrichtung zwischen der Abtasteinheit und der Schreibfläche oder dem Pulverbett angeordnet.

Die weitere Lichtquelle kann insbesondere zwischen der F-Theta Linse und der Schreibfläche oder dem Pulverbett und/oder um die F-Theta Linse beziehungsweise Fokussiereinheit herum angeordnet sein.

Die wenigstens eine weitere Lichtquelle kann beispielsweise außerhalb eines Arbeitsraums, insbesondere außerhalb eines abgeschlossenen oder abschließbaren Arbeitsraums der Vorrichtung, innerhalb dessen sich die Schreibfläche und das Werkstück befinden, angeordnet sein. Insbesondere kann die wenigstens eine weitere Lichtquelle zwischen der Abtasteinheit und einer Abdeckung oder einem Abdeckfenster des Arbeitsraums angeordnet sein.

Gemäß solcher Ausführungsformen ist der gesamte Arbeitsraum oder ein großer Teil oder ein Großteil des Arbeitsraums beleuchtbar.

Eine Anordnung außerhalb des Arbeitsraums kann die weitere Lichtquelle vor Schmutz und dergleichen schützen.

Gemäß zumindest einer Ausführungsform ist der Detektor dazu eingerichtet, basierend auf dem Abbild des Teilbereichs wenigstens ein Detektorsignal zu erzeugen. Die Vorrichtung weist eine Auswerteeinheit zur Auswertung und/oder Verarbeitung des wenigstens einen Detektorsignals auf.

Die Auswertung und/oder Verarbeitung des Detektorsignals kann beispielsweise eine Darstellung des Abbilds des Teilbereichs, beispielsweise auf einer Anzeigeeinrichtung beinhalten.

Die Auswertung und/oder Verarbeitung kann auch eine Speicherung des Detektorsignals oder von basierend auf dem Detektorsignal bestimmten Informationen oder Daten beinhalten.

Die Auswertung und/oder Verarbeitung des Detektorsignals kann auch eine Auswertung von Bilddaten des Abbilds enthalten, insbesondere zur Erkennung von Fehlstellen oder zur thermografischen Bewertung oder Beurteilung.

Gemäß zumindest einer Ausführungsform ist die Auswerteeinheit dazu eingerichtet, basierend auf dem wenigstens einen Detektorsignal wenigstens eine thermische Kenngröße, insbesondere zur thermografischen Erfassung oder Auswertung, des Teilbereichs zu ermitteln.

Die wenigstens eine thermische Kenngröße kann beispielsweise eine Temperatur der Schreibfläche oder des Pulverbetts in dem Teilbereich oder eine Temperaturverteilung oder einen Temperaturverlauf der Temperatur in dem Teilbereich beinhalten.

Die wenigstens eine thermische Kenngröße kann alternativ oder zusätzlich ein Abkühlverhalten oder ein Abkühlparameter oder eine Abkühlzeit in dem Teilbereich beinhalten. Die thermische Kenngröße kann auch eine Temperatur oder Temperaturverteilung an dem Schreibpunkt oder um den Schreibpunkt herum beinhalten.

Das Ermitteln der thermischen Kenngröße basierend auf dem wenigstens einen Detektorsignal erfolgt beispielsweise basierend auf einem der Detektorsignale oder auf mehreren des wenigstens einen Detektorsignals.

Durch den Schmelzstrahl in das Pulverbett oder das Werkstück eingebrachte Energie, insbesondere in den Teilbereich eingebrachte Energie, kann zur Temperaturerhöhung des Pulverbetts oder des Werkstücks oder der Schreibfläche in dem Teilbereich führen. Entsprechend kann der Teilbereich Energie in Form von thermischer Strahlung und/oder in Form von sichtbarem Licht abstrahlen. Insbesondere kann der Teilbereich elektromagnetische Strahlung im sichtbaren und/oder infraroten Bereich, insbesondere im nahinfratoren Bereich abstrahlen. Eine Intensität der abgestrahlten elektromagnetischen Strahlung lässt Rückschlüsse auf die Temperatur oder Temperaturverteilung oder die wenigstens eine thermische Kenngröße zu.

Insbesondere kann der Teilbereich als Lambert-Strahler oder schwarzer Strahler oder näherungsweise als Lambert-Strahler oder schwarzer Strahler erscheinen.

Ein Wert der Temperatur des Teilbereichs kann beispielsweise proportional zu einer maximalen Wellenlänge eines Spektrums der von dem Teilbereich thermisch ausgestrahlten elektromagnetischen Strahlung sein. Insbesondere kann das Wiensche Verschiebungsgesetz gelten oder näherungsweise gelten.

Durch eine derartige thermografische Überwachung und Beobachtung des Teilbereichs kann ein Schmelzverhalten des Materials beobachtet und überwacht werden. Entsprechend kann eine Temperaturregelung beispielsweise mittels einer Energieregelung des Schmelzstrahls vorgenommen werden, um die Temperatur des Teilbereichs in Echtzeit auf eine gewünschte Temperatur zu regeln, beispielsweise auf eine konstante Solltemperatur. Dementsprechend können homogenere Materialeigenschaften erreicht werden und insbesondere Fehlstellen durch lokal überhöhte Temperatur oder zu geringe Temperatur, was beispielsweise zu einem mangelnden Aufschmelzen des Materials führen kann, vermieden werden.

Gemäß zumindest einer Ausführungsform weist der Detektor einen Sensor auf Siliziumbasis auf, der eine Empfindlichkeit wenigstens im sichtbaren Bereich und im nahen Infrarotbereich aufweist, beispielsweise in einem Bereich von 300 nm bis 1100 nm.

Unter Empfindlichkeit kann hierbei beispielsweise eine ausreichend hohe Empfindlichkeit verstanden werden, um eine Abbildung in für die jeweiligen Zwecke ausreichender Qualität zu ermöglichen.

Gemäß zumindest einer Ausführungsform weist der Detektor einen Sensor basierend auf einem Verbindungshalbleiter, beispielsweise Indiumgalliumantimonid oder Zinkselenid auf. Solche Sensoren sind beispielsweise im infraroten Bereich besonders empfindlich.

Gemäß verschiedener Ausführungsformen kann die Kamera als thermoelektrische Kamera für einen nahen Infrarot- und/oder einen fernen Infrarotbereich ausgebildet sein.

Gemäß zumindest einer Ausführungsform beinhaltet die Kamera einen Polarisationsfilter und/oder der Detektor ist als polarisationsempfindlicher Detektor ausgebildet.

In solchen Ausführungsformen kann die Auswerteeinheit beispielsweise dazu eingerichtet sein, basierend auf dem wenigstens eine Detektorsignal, insbesondere basierend auf einer aus dem wenigstens einen Detektorsignal abgeleiteten oder bestimmten Polarisationsinformation, eine Materialinformation des Materials des Pulverbetts oder des Werkstücks zu ermitteln. Die Auswerteeinheit ist beispielsweise dazu eingerichtet, die wenigstens eine thermische Kenngröße basierend auf oder in Abhängigkeit von der Materialinformation zu ermitteln.

Unterschiedliche Materialien oder Materialklassen können unterschiedliche Auswirkungen auf die Polarisation des von dem Material reflektierten Lichts haben. Entsprechend können Materialien anhand der Polarisationsinformation oder der Materialinformation unterschieden werden. Dementsprechend kann die Auswerteeinheit beispielsweise dazu eingerichtet sein, unterschiedliche materialabhängige thermische Kalibrierungen vorzuhalten und eine entsprechende thermische Kalibrierung bei der Bestimmung und Ermittlung der thermischen Kenngröße anzuwenden.

Gemäß einem weiteren unabhängigen Aspekt des verbesserten Konzepts wird eine Vorrichtung zur additiven Fertigung eines Werkstücks angegeben. Die Vorrichtung weist eine Abtasteinheit auf, die dazu eingerichtet ist, einen Schmelzstrahl auf einen Schreibpunkt auf einer Schreibfläche zu lenken. Die Vorrichtung weist außerdem eine Steuereinheit, eine Abbildungseinheit und eine Lichtfeldkamera mit einem ortsauflösenden optischen Detektor auf. Die Abbildungseinheit ist dazu eingerichtet und angeordnet, die Schreibfläche das Pulverbett oder einen Teilbereich der Schreibfläche auf dem Detektor abzubilden.

Solche Ausführungsformen weisen insbesondere die oben ausgeführten Vorteile der Lichtfeldkamera auf.

Gemäß einem weiteren unabhängigen Aspekt des verbesserten Konzepts wird ein Verfahren zur Überwachung einer additiven Fertigung eines Werkstücks angegeben, wobei für die Fertigung ein Schmelzstrahl auf einen Schreibpunkt auf einer Schreibfläche gelenkt wird, Das Verfahren beinhaltet ein Aufnehmen eines wenigstens zweidimensionalen ortsaufgelösten Abbilds eines Teilbereichs der Schreibfläche, wobei eine Position des Teilbereichs während der Fertigung verändert wird. Wenigstens ein Detektorsignal wird basierend auf dem Abbild erzeugt. Die Fertigung des Werkstücks wird basierend auf dem wenigstens einen Detektorsignal überwacht.

Das Überwachen kann beispielsweise Beobachten, Auswerten und/oder Verarbeiten des Abbilds und/oder der Detektorsignale beinhalten.

Gemäß einem weiteren unabhängigen Aspekt des verbesserten Konzepts wird ein Verfahren zur Prozessregelung einer additiven Fertigung eines Werkstücks angegeben. Dazu wird die Fertigung des Werkstücks gemäß einem Verfahren nach dem verbesserten Konzept zur Überwachung der additiven Fertigung überwacht. Wenigstens eine thermische Kenngröße des Teilbereichs wird basierend auf dem wenigstens einen Detektorsignal ermittelt. Wenigstens ein Prozessparameter für die Fertigung wird abhängig von der wenigstens einen thermischen Kenngröße festgelegt oder verändert.

Das Festlegen oder Verändern des wenigstens einen Prozessparameters kann beispielsweise das Berechnen optimierter oder aktualisierter Schreibdaten zur Steuerung der Abtastvorrichtung beinhalten.

Das Festlegen oder Verändern wenigstens einen Prozessparameters kann auch das Erzeugen und/oder Ausgeben einer Information, insbesondere einer Statusinformation, bezüglich potentieller Fehler oder Abweichungen von einem Sollparameters während der Fertigung beinhalten.

Das Festlegen oder Verändern des wenigstens einen Prozessparameters kann beispielsweise auch einen Abbruch des Schreibprozesses, insbesondere bei Feststellung einer Toleranzüberschreitung, einer Kontamination oder der Identifizierung von Rissen oder sonstiger Fehler beinhalten.

Das Festlegen oder Verändern des wenigstens einen Prozessparameters kann auch das Festlegen oder Verändern eines Beschichtungsparameters, beispielsweise einer Schichtdicke zur Beschichtung des Werkstücks, das Festlegen oder Verändern eines Schmelzstrahlparameters, beispielsweise einer Ablenkungsgeschwindigkeit, oder einer Energie des Schmelzstrahls beinhalten.

Das Festlegen oder Verändern wenigstens eines Prozessparameters kann auch das Festlegen oder Verändern eines Fokussierungsparameters, beispielsweise der Fokussiereinheit, insbesondere der F-Theta Linse, beinhalten.

Gemäß einem Verfahren zur Prozessregelung nach dem verbesserten Konzept wird also eine online- oder Echtzeit-Prozessführung, insbesondere thermische Prozessführung, ermöglicht. Entsprechend kann der Einfluss von Fehlern, die beispielsweise zur Einschränkung einer Gebrauchsfähigkeit des Werkstücks oder zu einem Ausfallrisiko des Werkstücks in einem späteren Betrieb führen können, oder weitere Probleme bei der additiven Fertigung, die aufgrund von thermischen Inhomogenitäten auftreten können, vermieden werden. Damit kann also ein thermisch besonders stabiler Prozess erstellt und reproduzierbar gefahren werden.

Gemäß zumindest einer Ausführungsform wird ein Schallsignal von einem mit dem Werkstück gekoppelten Schallsensor erfasst und das Festlegen oder Verändern des wenigstens einen Prozessparameters wird abhängig von dem Schallsignal durchgeführt.

Aus dem Schallsignal kann beispielsweise eine Information über eine mögliche Rissbildung in dem Werkstück oder über Materialspritzer während der Fertigung bestimmt werden.

Gemäß wenigstens einer Ausführungsform wird das Schallsignal gefiltert, insbesondere hochpassgefiltert, und der wenigstens eine Prozessparameter wird abhängig von dem gefilterten Schallsignal festgelegt oder verändert.

Durch das Hochpassfiltern kann ein detektierter Frequenzbereich nach unten begrenzt werden, beispielsweise um akustische Störungen aus einem Umfeld der Vorrichtung oder von Antrieben weitgehend zu unterdrücken.

Alternativ oder zusätzlich zu der Filterung des Schallsignals kann als Schallsensor ein Mikrofon, das für hohe Frequenzbereiche ausgelegt und angepasst ist, eingesetzt werden.

Das Mikrofon kann beispielsweise als Piezomikrofon, als optisches Mikrofon oder als Mikrofon mit Tauchspule ausgebildet sein.

Das Mikrofon kann auch als micro elektrical mechanical system, MEMS, insbesondere als optisches MEMS, ausgebildet sein.

Gemäß zumindest einer Ausführungsform wird ein Spektrometersignal basierend auf von dem Pulverbett oder dem Teilbereich oder der Schreibfläche oder dem Werkstück ausgehendem Licht erzeugt und das Festlegen oder Verändern des wenigstens einen Prozessparameters wird abhängig von dem Spektrometersignal durchgeführt.

Gemäß einem weiteren unabhängigen Aspekt des verbesserten Konzepts wird ein Computerprogramm mit Befehlen angegeben, welche bei Ausführung des Computerprogramms durch ein Computersystem eine Vorrichtung gemäß dem verbesserten Konzept dazu veranlassen, ein Verfahren zum Überwachen einer additiven Fertigung oder ein Verfahren zur Prozessregelung einer additiven Fertigung gemäß dem verbesserten Konzept durchzuführen.

Das Computersystem kann insbesondere von der Vorrichtung umfasst sein. Das Computersystem kann beispielsweise die Steuereinheit, die Auswerteeinheit und/oder eine weitere Prozessoreinheit zur Durchführung erforderlicher Rechenschritte beinhalten.

Gemäß einem weiteren unabhängigen Aspekt des verbesserten Konzepts wird ein computerlesbares Speichermedium angegeben, auf welchem ein Computerprogramm gemäß dem verbesserten Konzept gespeichert ist.

Weitere Ausführungsformen des Verfahrens zur Überwachung der additiven Fertigung gemäß dem verbesserten Konzept ergeben sich unmittelbar aus den verschiedenen Ausgestaltungsformen und Implementierungen einer Vorrichtung nach dem verbesserten Konzept und umgekehrt.

Weitere Ausführungsformen des Verfahrens zur Prozessregelung gemäß dem verbesserten Konzept ergeben sich unmittelbar aus den verschiedenen Ausgestaltungsformen und Implementierungen der Vorrichtung gemäß dem verbesserten Konzept und umgekehrt.

Insbesondere kann eine Vorrichtung gemäß dem verbesserten Konzept zum Durchführen eines Verfahrens gemäß dem verbesserten Konzept ausgebildet, insbesondere programmiert, sein.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise in verschiedenen Figuren wiederholt.

In den Figuren zeigen:
- FIG 1: eine beispielhafte Ausführungsform einer Vorrichtung gemäß dem verbesserten Konzept;
- FIG 2: eine weitere beispielhafte Ausführungsform einer Vorrichtung gemäß dem verbesserten Konzept;
- FIG 3: eine weitere beispielhafte Ausführungsform einer Vorrichtung gemäß dem verbesserten Konzept;
- FIG 4: eine weitere beispielhafte Ausführungsform einer Vorrichtung gemäß dem verbesserten Konzept;
- FIG 5: eine weitere beispielhafte Ausführungsform einer Vorrichtung gemäß dem verbesserten Konzept;
- FIG 6: eine weitere beispielhafte Ausführungsform einer Vorrichtung gemäß dem verbesserten Konzept;
- FIG 7: ein Flussdiagramm einer beispielhaften Ausführungsform eines Verfahrens zur Prozesssteuerung gemäß dem verbesserten Konzept;
- FIG 8: ein Flussdiagramm einer weiteren beispielhaften Ausführungsform eines Verfahrens zur Prozesssteuerung gemäß dem verbesserten Konzept; und
- FIG 9: ein Flussdiagramm einer weiteren beispielhaften Ausführungsform eines Verfahrens zur Prozesssteuerung gemäß dem verbesserten Konzept.

Alle bezüglich der Figuren beschriebenen Ausführungsformen der Vorrichtung und der Verfahren können für Fertigungsverfahren aus einem Pulverbett angewandt werden. Analog lassen sich alle Ausführungen für Verfahren ohne Pulverbett anwenden. Eine Schreibfläche tritt dann entsprechend an die Stelle des Pulverbetts.

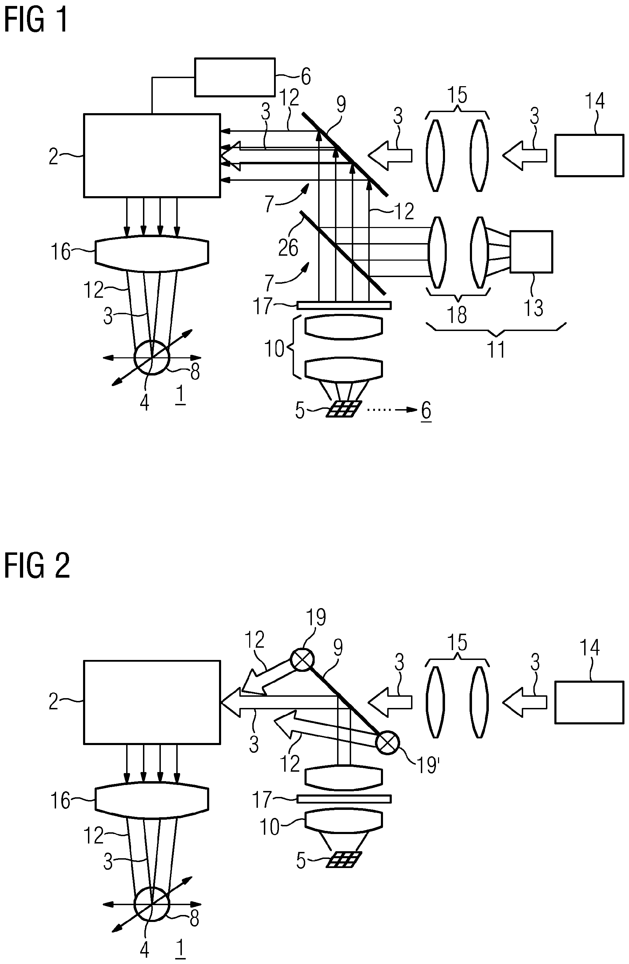

In FIG 1 ist schematisch eine beispielhafte Ausführungsform einer Vorrichtung gemäß dem verbesserten Konzept gezeigt.

Die Vorrichtung dient zur additiven Fertigung eines Werkstücks, beispielsweise aus einem Pulverbett 1. Das Pulverbett 1 kann in einem Arbeitsraum angeordnet sein, der beispielsweise von einem Gehäuse (nicht gezeigt) ganz oder teilweise umschlossen ist.

Eine Heizquelle 14 ist dazu eingerichtet, einen Schmelzstrahl 3, insbesondere einen Laserstrahl oder Elektronenstrahl, zu erzeugen.

Die Vorrichtung beinhaltet eine Abtasteinheit 2, auch Scaneinheit genannt, die auf einer Eingangsseite, welche der Heizquelle 14 zugewandt ist, den Schmelzstrahl 3 empfangen kann. Zwischen der Abtasteinheit 2 und der Heizquelle 14 kann optional eine Optik 15 zur Strahlformung des Schmelzstrahls 3 angeordnet sein.

Die Vorrichtung beinhaltet weiterhin eine Fokussiereinheit 16, die beispielsweise als F-Theta Linse ausgebildet ist oder eine solche enthält, und die bezüglich der Abtasteinheit 2 ausgangsseitig angeordnet ist, also insbesondere zwischen der Abtasteinheit 2 und dem Pulverbett 1. Mittels der Fokussiereinheit 16 kann der Schmelzstrahl 3 fokussiert und auf einen Schreibpunkt 4 auf einer Oberfläche des Pulverbetts 1 oder des Werkstücks gerichtet werden. Zur Fertigung des Werkstücks kann die Scaneinheit 2, beispielsweise durch eine Steuereinheit 6 der Vorrichtung, angesteuert werden, um den Schmelzstrahl 3 abzulenken, wie es eine auftragsgemäße Fertigung des Werkstücks erfordert.

Die Vorrichtung weist außerdem eine Abbildungseinheit 7 auf, mittels der ein Teilbereich 8 des Pulverbetts 1, im gezeigten Beispiel der FIG 1 ein Teilbereich 8 um den Schreibpunkt 4 herum, auf einen Detektor 5 der Vorrichtung abgebildet werden kann.

Der Detektor 5 ist als ortsaufgelöster Detektor mit einem Array aus lichtempfindlichen Sensoren ausgestaltet und kann beispielsweise Teil einer Kamera sein. Die Abbildungseinheit kann beispielsweise einen Strahlteiler 9 beinhalten, der zwischen der Heizquelle 14 und der Abtasteinheit 2 angeordnet ist. Durch den Strahlteiler 9 kann Licht, welches ausgehend von dem Teilbereich 8 über die Abbildungseinheit 2 auf den Strahlteiler 9 trifft, ausgekoppelt und auf den Detektor 5 gerichtet werden.

Optional beinhaltet die Abbildungseinheit 7 ein Objektiv 10 zur Strahlformung und/oder Fokussierung des ausgekoppelten Lichts auf dem Detektor 5.

Weiterhin optional kann die Abbildungseinheit einen Filter 17 aufweisen, der vorzugsweise Licht, für welches der Detektor 5 empfindlich ist, passieren lässt und vorzugsweise Licht, das einer Wellenlänge oder einem Wellenlängenbereich des Schmelzstrahls 3 entspricht, blockiert oder abschwächt.

Optional kann die Vorrichtung auch eine Beleuchtungseinheit 11 aufweisen, insbesondere mit einer Lichtquelle 13 und einer optionalen Strahlformungsoptik 18. Die Beleuchtungseinheit 11 ist derart angeordnet und eingerichtet, dass sie ein Beleuchtungslicht 12 in den Strahlengang des Schmelzstrahls 3 einkoppeln und dadurch einen Beleuchtungsbereich auf dem Pulverbett 1 beleuchten kann, der den Teilbereich 8 wenigstens teilweise beinhaltet.

Im gezeigten Beispiel der FIG 1 weist die Abbildungseinheit 7 oder die Beleuchtungseinrichtung 11 dazu einen weiteren Strahlteiler 26 auf, der das Beleuchtungslicht 12 zunächst in einen Strahlengang des Lichts zur Abbildung des Teilbereichs 8 auf den Detektor 5 und dann beispielsweise über den Strahlteiler 9 in den Strahlengang des Schmelzstrahls 3 einkoppeln kann.

Im gezeigten Beispiel sind also sowohl der Teilbereich als auch der Beleuchtungsbereich direkt derart an den Schmelzstrahl 3 gekoppelt, dass die Abtasteinheit 2 bei einer Ablenkung des Schmelzstrahls 3 synchron auch das Beleuchtungslicht 12 und das Abbildungslicht zur Abbildung des Teilbereichs 8 auf den Detektor 5 ablenkt.

In FIG 2 ist eine schematische Darstellung einer weiteren beispielhaften Ausführungsform der Vorrichtung gezeigt.

Die Ausführungsform der FIG 2 unterscheidet sich von derjenigen in der FIG 1 wenigstens dadurch, dass die Beleuchtungseinrichtung 11 weitere Lichtquellen 19, 19' aufweist, die das Beleuchtungslicht 12 direkt in den Strahlengang des Schmelzstrahls 3 einkoppeln können. Dazu sind die Lichtquellen 19, 19' beispielsweise um den Strahlengang des Schmelzstrahls 3 herum, beispielsweise an dem Strahlteiler 9, angeordnet.

In solchen Ausführungsformen kann beispielsweise auf den weiteren Strahlteiler 26 verzichtet werden.

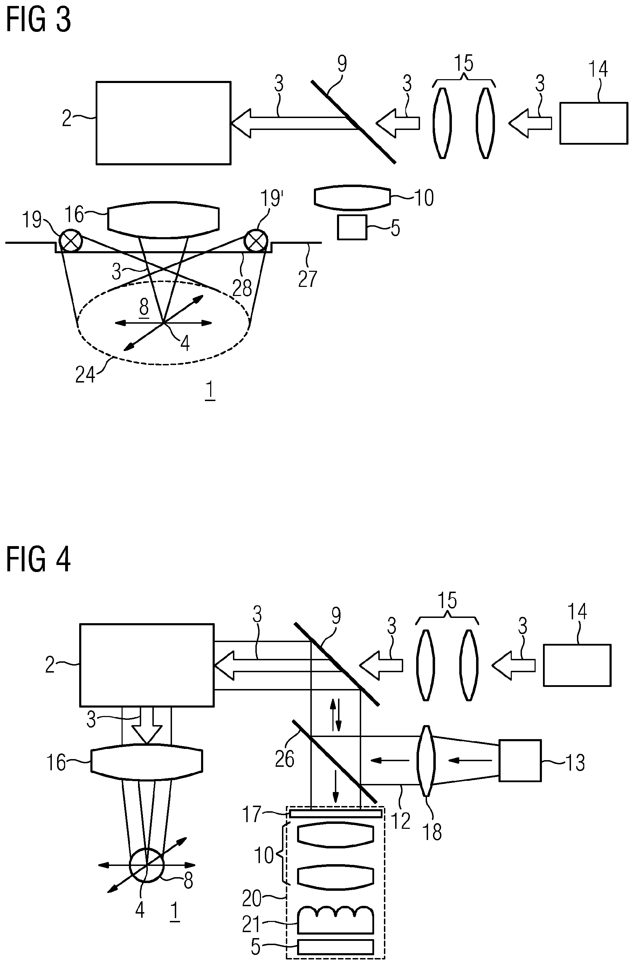

In FIG 3 ist eine schematische Darstellung einer weiteren beispielhaften Ausführungsform der Vorrichtung gezeigt.

Die Ausführungsform der FIG 3 unterscheidet sich von denen der FIG 2 insbesondere dadurch, dass die weiteren Lichtquellen 19, 19' zwischen der Abtasteinheit 2 und dem Pulverbett 1 angeordnet sind, insbesondere außerhalb eines Arbeitsraumgehäuses 27, innerhalb dessen das Pulverbett 1 angeordnet ist. Die weiteren Lichtquellen 19, 19' können beispielsweise das Beleuchtungslicht 12 durch ein Abdeckfenster 28 des Arbeitsraumgehäuses 27 direkt auf das Pulverbett 1 richten. Ein Beleuchtungsbereich 24 kann damit große Teile oder das gesamte Pulverbett 1 und das Werkstück abdecken.

Wie sich für den Fachmann unmittelbar ergibt, können einzelne Merkmale, insbesondere die verschiedenen Ausführungsbeispiele der Beleuchtungseinheit 11 nach den Figuren FIG 1 bis FIG 3, in beliebiger Weise kombiniert werden.

Die Vorrichtungen wie sie in FIG 1 bis FIG 3, oder auch in FIG 4 bis FIG 6, gezeigt sind, können insbesondere zur Überwachung einer additiven Fertigung und/oder zur Prozessregelung einer additiven Fertigung gemäß jeweiliger Verfahren nach dem verbesserten Konzept eingesetzt werden.

Insbesondere kann durch die Vorrichtung nach dem verbesserten Konzept eine Prozessüberwachung und Prozesssteuerung in Echtzeit oder nahezu in Echtzeit, insbesondere online, durchgeführt werden.

Gemäß einer Vorrichtung nach FIG 1 bis FIG 6 wird die Abbildungseinheit 11, welche insbesondere eine abbildende Optik enthält, eingesetzt, um den Teilbereich 8, insbesondere den Teilbereich 8 um den Schreibpunkt 4 herum, auf den ortsaufgelösten Detektor 5 abzubilden. Entsprechend einem Auflösungsvermögen der verwendeten Optik, welche insbesondere durch eine verfügbare numerische Apertur gegeben ist, kann eine Pixelgröße erzielt werden, die wenigstens halb so groß gewählt wird wie eine nach einem Rayleigh- oder einem Sparrow-Kriterium bestimmte Auflösungsgrenze. Bei einer Abtastung mit einer Auflösung von beispielsweise 10 pm ergibt sich bei einer Sensorgröße des Detektors von 10 Megapixeln und einer mittleren Kantenlänge von etwa 3000 Pixeln ein Erfassungsbereich von über 30 mm Kantenlänge, also von rund 10 cm² Fläche. Bei Verfahren zur additiven Fertigung aus einem Pulverbett liegt eine Korngröße eines Pulvers zur Fertigung, insbesondere eines Metallpulvers, beispielsweise in einem Bereich von circa 10 pm. Andere Parametrierungen sind beispielsweise möglich, um optimale Abbildungsbedingungen in anderen konkreten Anwendungsfällen zu erhalten.

Wie in FIG 1 bis FIG 6 gezeigt, kann das Licht für die Abbildung auf dem Detektor per Strahlteiler 9 aus einem Strahlengang des Schmelzstrahls 3 abgezweigt werden. Durch die Anordnung des Strahlteilers 9 zwischen der Heizquelle 14 und der Abtasteinheit 2 bleibt das optische System immer zentriert zum Schmelzstrahl 3, insbesondere unabhängig von einem Auslenkungszustand eines Umlenkspiegels der Abtasteinheit 2 im jeweiligen Schreibprozess. Der Ort des Schmelzstrahls 3 kann mit Vorteil in einem zentralen Bereich des Detektorbildes angeordnet sein, da hier dann der Schreibprozess stattfindet und sich beispielsweise im Falle von SLM ein Schmelzbereich (Englisch: "Meltpool") ausbildet.

Das optionale Beleuchtungssystem erlaubt es, besonders hochwertige Bilder aufzunehmen. Eine Beleuchtungswellenlänge kann dabei an einen Empfindlichkeitsbereich des Detektors 5 angepasst sein.

Vorteilhaft ist die Beleuchtungseinheit ein- und ausschaltbar ausgebildet, sodass zum einen im eingeschalteten Zustand beispielsweise das gesamte Gesichtsfeld mit einer Grundbeleuchtung ausgeleuchtet sein kann. Da ein Schreibbereich und diesen umgebende Bereiche in dem Pulverbett 1 oder auf dem Werkstück aufgrund einer entsprechend erhöhten Temperatur auch im Infrarotbereich oder im sichtbaren Spektralbereich abstrahlen können, können diese Bereiche im Bild noch heller erscheinen. Zum anderen ist im ausgeschalteten Zustand der Beleuchtungseinheit 11, abgesehen von möglichem Umgebungslicht, dann nur das Selbstleuchten des Schreibbereichs und seiner Umgebung zu sehen. Dieser Bereich kann dann beispielsweise thermografisch erfasst werden und in seiner Temperatur bewertet werden.

Der Teilbereich 8 leuchtet also aufgrund der mit dem Schmelzstrahl 3 eingebrachten Energie auf, weil das erhitzte Material die Energie thermisch zum Teil wieder abstrahlt. Somit ist die Helligkeit, mit der ein Objekt in dem Abbild im Detektor 5 erscheint, korreliert mit der Temperatur dieses Objekts, beispielsweise des Teilbereichs 8. Diese Zuordnung von Helligkeit zu Aufnahmeparametern, wie Belichtungszeit oder Verstärkung, oder zu Einstellungen einer Abbildungsoptik, wie beispielsweise Apertur oder Blende, oder Werkstoffparametern, wie Material, Korngröße, Emissivität des Pulvers oder von entsprechend verschmolzenem Material, kann mit einer thermometrischen Kalibrierung erfasst werden und dann zur Messung, insbesondere thermometrischen Messung, herangezogen werden.

Mit der thermometrischen Messung wird es insbesondere möglich, eine Helligkeitsverteilung im Bild unmittelbar in eine Temperaturverteilung des Werkstücks umzurechnen, sodass sich mit einer Vorrichtung gemäß dem verbesserten Konzept in einem Bereich um den Schmelzstrahl 3 herum, insbesondere in dem Teilbereich 8, ein thermisches Profil des Werkstücks erkennen und messen lässt.

Wenn sich die Emissivität des Pulver von der des gesinterte oder geschmolzene Materials unterscheiden, kann es vorteilhaft und zweckmäßig sein, das Abbild vor der Anwendung der thermometrischen Kalibrierung erst mit einer Bildverarbeitung zu analysieren, um zu bestimmen, welche Bildbereiche mit Pulver und welche mit gesintertem oder geschmolzenem Material belegt sind. Danach kann beispielsweise die jeweilige thermische Kalibrierung bezogen auf die vorliegenden Materialarten erfolgen.

Aufgrund der Verarbeitung kann beispielsweise bei SLM Verfahren gesintertes Material am Rand einer Schreibbahn auftreten, beispielsweise wenn die Energie beziehungsweise Temperatur für ein komplettes Aufschmelzen nicht ausreichend war und das Material nur angeschmolzen wurde und so benachbarte Pulverteilchen versintert wurden. Allgemein kann es für eine aussagefähige thermometrische Kalibrierung vorteilhaft sein, entsprechend der im Kamerabild, also im Abbild auf dem Detektor 5, unterscheidbaren Materialkonfigurationen mehrere Materialarten zu unterscheiden und für diese dann spezifische einzelne thermische Kalibrierungen vorzuhalten. Wenn Materialarten auf diese Weise nicht unmittelbar unterscheidbar sind, kann es auch vorteilhaft sein, die Materialzuordnung beispielsweise über einen lateralen Abstand von der Schreibbahn zu treffen, weil gegebenenfalls a priori, beispielsweise aus Labor- oder Schreibversuchen, bekannt sein kann, wie sich unterschiedliche Materialverbünde im Abstand von der Schreibbahn ergeben.

Für eine optische Unterscheidung des Materials kann es vorteilhaft sein, einen Sichtbereich des Detektors 5 mit unpolarisiertem, mit polarisiertem oder mit teilpolarisierten Licht mit bekannten Polarisationszustand zu beleuchten und das Bild mit einer polarisationsempfindlichen Kamera aufzunehmen. Unter einer polarisationsempfindlichen Kamera kann hier eine Kamera verstanden werden, die entweder einen polarisationsempfindlichen Kamerachip mit entsprechender Struktur aufweist. Alternativ kann eine Kamera vorgesehen sein, bei der vor einem konventionellen Kamerachip, bevorzugt auf einem Strahlweg zwischen Strahlteiler 9 und Kamerachip, also Detektor 5, ein Polarisationsfilter 17 angeordnet ist, der entweder in den Strahlengang eingebracht wurde oder in seiner Durchlassrichtung veränderlich sein kann, sodass mit unterschiedlichen Einstellungen des Polarisationsfilters 17 der Polarisationszustand des Lichts aus dem Objektbereich messbar wird.

Anstelle einer Unterscheidung des Materialverhaltens über die Änderung des Polarisationszustands im reflektierten Licht im Vergleich zum eingestrahlten Beleuchtungslicht 12 kann auch ein Reflexionsverhalten des Teilbereichs 8 herangezogen werden. Hat man beispielsweise eine strukturierte Beleuchtung, die beispielsweise zwei Gittermuster enthält, welche zum Beispiel um einen festen Winkel, etwa 45°, gegeneinander verdreht sind und eines der Gittermuster scharf auf eine Oberfläche des Pulverbetts 1 oder des Werkstücks projiziert wird, während das andere Muster diffus abgestrahlt wird, so kann über die Reflexionsgüte mittels Deflektometrie oder Streifenprojektion und dem jeweiligen Grad der Reflexion beziehungsweise dem Kontrast eine Materialart, beispielsweise pulverförmig oder aufgeschmolzen, identifiziert werden.

Die Abbildung des Teilbereichs 8 auf dem Detektor 5 kann beispielsweise mit einer Kamera, die den Detektor 5 enthält, erfolgen.

Mit Vorteil ist eine Aufnahme des Abbilds mit der Kamera mit dem Schmelzstrahl 3 beziehungsweise der Abbildungseinheit 2 gekoppelt, um möglichst nur mit einem Lichtblitz ein Bild aufzunehmen, damit es nicht durch eine Bewegung des Schmelzstrahls 3 und damit auch des Beobachtungsstrahlengangs aufgrund der Strahlablenkung in der Abbildungseinheit 2 zu Verschmierungen des Bildinhaltes, beziehungsweise zur Bewegungsunschärfen oder Motion Blurring kommt.

Prinzipiell kann Motion Blurring über bekannte Motion Deblurring Methoden kompensiert werden. Dafür muss eine relative Bewegung zwischen Teilbereich 8 und Kamera bekannt sein, sodass damit zumindest größere Strukturen besser erkennbar und besser kontrastiert darstellbar werden.

Alternativ oder zusätzlich können der Detektor 5 und/oder das Objektiv 10 mit einem oder mehreren Aktuatoren (nicht gezeigt) ausgestattet sein, sodass ein Nachführung des Objektivs 10 und/oder des Detektors 5 oder der Kamera entsprechend einer Bewegung des Schreibstahls 3 erfolgen kann. Dazu kann beispielsweise eine aktuelle Position der Abbildungseinheit 2 beziehungsweise eines Umlenkspiegels der Abbildungseinheit 2 oder eine Position des Schreibpunkts 4 bekannt sein, sodass aus einem entsprechenden Ortssignal die Bewegungsinformationen bestimmt werden können.

In einer Ausführungsform kann beispielsweise der Detektor 5 als Kamerasensor ausgebildet sein, der gegenüber dem Objektiv 10 in einer Richtung innerhalb einer Detektorebene beweglich ist. Eine Bewegbarkeit senkrecht zur Detektorebene kann ebenfalls vorteilhaft sein, beispielsweise um eine Defokussierung durch das Abtastsystem 2 oder die F-Theta der Fokussiereinheit 16, beispielsweise an Rändern des Gesichtsfelds, zu kompensieren. Mit einer Nachführung des Detektors 5 senkrecht zur Detektorebene kann dann der Fokus bestmöglich nachgeführt werden.

Zusätzlich zur Bewegbarkeit des Detektors 5 kann der Detektor beispielsweise mit einer kardanischen Aufhängung mit einem effektiven Drehpunkt in der Mitte des Detektors 5 ausgestattet sein. Dies kann vorteilhaft sein, da so auch eine Neigung des Teilbereichs 5 relativ zur optischen Achse über den Arbeitsbereich der Vorrichtung kompensiert werden kann. Wird besonders vorteilhaft der Abstand des Drehpunktes von der Detektoroberfläche passend zu einem Vergrößerungsverhältnis der Fokussiereinheit 16 oder einer Ablenkung durch die Abtasteinheit 2 oder Vergrößerung durch die Abbildungsoptik gewählt, so ist eine komplette Korrektur von Verschiebung, Neigung und Fokus mit nur drei Antrieben für den Detektor 5 möglich.

Alternativ oder zusätzlich zu den genannten Bewegungen des Detektors 5 sind auch andere Kompensationsglieder vorstellbar. So kann beispielsweise eine Verkippung des Abbildes auch durch ein Dezentrieren von mindestens einer Linse beziehungsweise Linsengruppe in der Abbildungsoptik erreicht werden, oder es können zu diesem Zweck spezielle Korrekturglieder für die Verschiebung und die Korrektur der möglichen Abbildungsfehler, beispielsweise Astigmatismus oder sphärischer Abbildungsfehler, vorgesehen werden. Diese können beispielsweise mit einer um zwei Achsen kippbaren beziehungsweise um eine optische Achse drehbare und eine sektrecht zur optischen Achse kippbare, insbesondere planparallele, Platte in der Abbildungsoptik zwischen Strahlteiler 9 und Detektor 5 ausgebildet sein. Die kippbare Platte kann bei passender Auslegung der Geometrie sowohl eine Fokuslage als auch die Abbildungsfehler durch den möglicherweise geneigten Strahlengang des Schmelzstrahls 3 zum Schreibort 4 zumindest weitestgehend korrigieren.

Bei einer Ausführung mit Drehung und Kippung können anstelle der kippbaren Platte auch zwei gegensinnig angeordnete Keilplatten vorgesehen sein, die beispielsweise gegeneinander um eine zur Scheitelachse der Keilplatten parallele Achse kippbar sind. So kann auch eine einstellbare Strahlumlenkung des Schmelzstrahls 3 erreicht werden, welche die Neigung des Abbildungsstrahls bezüglich des Teilbereichs 8 beziehungsweise des Pulverbett 1 kompensieren kann und das Abbild auf dem Detektor 5 vollflächig scharf einstellen lässt.

Bei additiven Fertigungsverfahren wie beispielsweise SLM oder SLS erfolgt eine hohe Erhitzung des Materials, sodass eine thermische Abstrahlung des Teilbereichs 8 bereits mit Kameras im nahen Infrarot oder im sichtbaren Spektralbereich erfolgen kann. Alternativ können auch Kameras mit Empfindlichkeiten im Infrarotbereich oder thermoelektrische Kameras für Nahinfrarot und/oder Ferninfrarot verwendet werden.

Um eine Rückwirkung des Schmelzstrahls 3 auf das Abbild auf dem Detektor 5 zu minimieren beziehungsweise auszuschließen, kann der Filter 17 einen dichroitischen Filter oder einen schmalbandigen, insbesondere an einen Wellenlängenbereich des Schmelzstrahls 3 angepassten, Sperrfilter für eine Wellenlänge des Schmelzstrahls 3 beinhalten. Alternativ oder zusätzlich kann ein entsprechender Filter im Strahlteiler 9 angeordnet sein. Falls der Schmelzstrahl 3 polarisiertes Licht enthält, kann auch die Polarisation für eine effiziente Filterung verwendet werden.

Mittels der Vorrichtung gemäß FIG 1 bis FIG 6 kann wie beschrieben auch in Bereichen benachbart zum aktuellen Schreibpunkt 4, insbesondere aus früher geschriebenen Bahnen oder auch im Pulverbett erkannt werden. Mit der Kenntnis über die Temperatur im Werkstück kann dann auch der aktuelle Schreibprozess in seinen Parametern so angepasst werden, dass beispielsweise beim Schreiben ein möglichst gleichmäßiges Temperaturprofil erreicht wird. So können beispielsweise thermische Spannungen, die über die lokale Erhitzung im Werkstück im Fertigungsprozess entstehen können, minimiert werden.

Vorrichtungen nach dem verbesserten Konzept gemäß FIG 1 bis FIG 6 erlauben eine flächenhafte Abbildung des Teilbereichs 8 um den Schreibpunkt 4 herum. Störstellen wie Defekte, Fehlstellen, überschüssiges Material, Spritzer und so weiter, insbesondere unmittelbar vor dem Schreibpunkt 4 und auch in einem Überlappungsbereich können erkannt werden.

Ferner kann ein thermisches zweidimensionales Bild erzeugt werden, bei dem ein Temperaturprofil im Teilbereich 8 messbar wird. Entsprechend kann eine angepasste Regelung einer Schmelzstrahlleistung für eine möglichst homogene Temperaturführung am Schreibpunkt 4 und im Teilbereich 8 erreicht werden. Auch eine Topografie des Teilbereichs 8 kann mit dreidimensionalen Verfahren wie Streifenprojektion oder Deflektometrie erkannt werden.

Alternativ zu den gezeigten Ausführungsformen in FIG 1 bis FIG 6, bei denen das Licht zur Abbildung des Teilbereichs 8 auf dem Detektor 5 aus dem Strahlengang des Schmelzstrahls 3 ausgekoppelt wurde, kann eine Kamera mit dem Detektor 5 auch direkt in den Arbeitsraum gerichtet sein und beispielsweise mit einer eigenen Kinematik dem Schmelzstrahl 3 oder dem Schreibpunkt 4 folgen. Insbesondere kann dem Schmelzstrahl 3 in diesem Fall über ein bildverarbeitungsbasiertes Vorgehen gefolgt werden. Dabei kann auch bei entsprechender Ansteuerung das Motion Blurring vermieden werden.

FIG 4 zeigt schematisch eine weitere beispielhafte Ausführungsform einer Vorrichtung gemäß dem verbesserten Konzept. Der grundsätzliche Aufbau der Vorrichtung entspricht dem in FIG 1 gezeigten.

Die Vorrichtung gemäß FIG 4 beinhaltet eine Lichtfeldkamera 20, auch als plenoptische oder Multiaperturkamera bezeichnet. Die Lichtfeldkamera 20 beinhaltet den Detektor 5, das Objektiv 10 sowie den optionalen Filter 17.

Des Weiteren beinhaltet die Lichtfeldkamera 20 beispielsweise ein Array aus Mikrolinsen 21, die zwischen dem Objektiv 10 und dem Detektor 5 angeordnet sind. Mittels der Mikrolinsen 21 wird ein entsprechender Abbildungsstrahlengang in Subaperturen geteilt. Für jede dieser Subaperturen entsteht dann auf dem Detektor 5 ein separates Bild mit jeweils leicht unterschiedlichen Blickwinkeln aufgrund des räumlichen Versatzes der Mikrolinse 21. Aus den leicht unterschiedlichen Teilbildern kann mittels Triangulationsmethoden eine räumliche Struktur des Teilbereichs 8 berechnet werden und es entstehen zweieinhalbdimensionale oder dreidimensionale Bilder. Um eine Tiefenmessung weiter zu verbessern, kann für verschiedene Linsen der Mikrolinsen 21 eine unterschiedliche Brennweite zum Einsatz kommen. Dazu können Linsen mit zwei, drei oder mehr unterschiedlichen Brennweiten verwendet werden.

Im Unterschied zu herkömmlichen Triangulations- oder Lichtschnittverfahren, wie Streifenprojektion oder Lasertriangulation, kann mittels der Lichtfeldkamera 20 an Kanten eine durch die vorgegebene Triangulationsrichtung und den Aufbau der Hardware unsymmetrische Vorprägung vermieden werden.

In manchen Ausführungsformen kann die Lichtfeldkamera 20 das gesamte Pulverbett 1 und Werkstück in einer Aufnahme überwachen. Mit Vorteil kann eine Einstellung der Lichtfeldkamera 20 während der Fertigung dann fixiert oder konstant bleiben.

In anderen Ausführungsformen kann die Lichtfeldkamera 20 gezielt auf Bereiche des Pulverbetts 1, insbesondere auf den Teilbereich 8, gerichtet sein und diese mit entsprechend höherer Auflösung inspizieren.

Insbesondere kann dazu der Abbildungsstrahl für die Lichtfeldkamera 20 zumindest teilweise koaxial mit dem Schmelzstrahl 3 geführt werden und koaxial mit dem Schmelzstrahl 3 auf das Pulverbett 1 treffen. Dies ist in der beispielhaften Ausführungsform der FIG 4 der Fall.

Wenn bei der Veränderung der Position des Teilbereichs 8 Schwenkbewegungen eingesetzt werden, so neigt sich eine optische Achse der Abbildungsoptik entsprechend der Schwenkbewegungen und folglich auch die scharf abgebildete Objektebene der Optik, die beispielsweise senkrecht auf der optischen Achse steht. Somit ändert sich die Bildschärfe der Abbildung entlang der Richtung der Einfallsebene des Abbildungsstrahls. Da aber die Lichtfeldkamera 20, insbesondere in der Version mit den Mikrolinsen 21 unterschiedlicher Brennweite, einen sehr viel größeren Tiefenschärfebereich scharf abbilden kann, kann diese Unschärfe vollständig oder teilweise kompensiert werden.

Die Abbildung auf den Detektor 5 der Lichtfeldkamera 20 kann digital umfokussiert werden, was zur Folge hat, dass je nach vorliegender Kippstellung der optischen Achse relativ zu einer Werkstückoberfläche oder einer Oberfläche des Pulverbetts 1 ein scharfes Bild für eine schräg zur optischen Achse liegende Bildebene berechnet werden, die der gekippten Objektebene über die Optik konjugiert ist. Alternativ oder zusätzlich kann eine dreidimensionale Punktwolke aus Messdaten der Lichtfeldkamera 20 bestimmt werden, die dann die gekippte Objektebene darstellen kann, insbesondere zusammen mit einer Topografie einzelner Merkmale im Teilbereich 8, wie beispielsweise Erhebungen oder Absenkungen, beispielsweise Materialspritzer auf dem Pulverbett 1 oder Löchern im Pulverbett 1. Auch für eine Verkippung der Daten in der dreidimensionalen Punktewolke kann es vorteilhaft sein, wenn eine rein durch eine Blickrichtung verursachte Verkippung aus dem Datensatz herausgerechnet wird. Eine Darstellung der Daten kann also in einem Referenzkoordinatensystem erfolgen, bevorzugt einem Werkstückkoordinatensystem oder Maschinenkoordinatensystem.

Auch für ein Zusammenführen von Messdaten entweder der dreidimensionalen Bilder oder der dreidimensionalen Punktwolke aus den Teilbildern in ein zusammenhängendes Bild mehrerer Teilbilder, die mit unterschiedlichen Kippstellungen aufgenommen wurden, ist eine Kompensation des Kippwinkels bei der Bildaufnahme, beispielsweise in einer der beschriebenen Weisen vorteilhaft.

Bilder der Lichtfeldkamera 20 können beispielsweise für eine feste Einstellung des Abbildungsobjektivs für Fokuslage und Zoom metrisch kalibriert werden. Mit metrisch kalibrierten Bildern lässt sich ein Stitching besser ausführen, weil die Verzeichnungen aus dem Kamerabild minimiert werden können.

Anstelle einer Messung unterschiedlicher Kalibrierbilder kann eine Wirkung der Optik für unterschiedliche Kippwinkel des Strahls und damit verbundener effektiver Strahlachsen auch per Simulation ermittelt werden und dann beispielsweise bei einer Auswertung berücksichtigt werden. Auch Kombinationen aus Messung und Simulation sind möglich, beispielsweise um einen Zeitvorteil der Simulation zu nutzen und andererseits dennoch einen Abgleich mit dem konkreten System möglichst vollständig zu erfassen.

Die Lichtfeldkamera 20 kann beispielsweise als Farbkamera oder Schwarzweißkamera mit einem Empfindlichkeitsbereich beispielsweise im ultravioletten, im sichtbaren, im infraroten, im nahinfraroten, im mittelinfraroten und/oder im ferninfraroten Spektralbereich aufgebaut sein. Für eine Anwendung bei SLM- oder SLS-Verfahren kann eine Version mit Siliziumdetektor vorteilhaft sein, insbesondere mit einem Empfindlichkeitsbereich von etwa 400 bis 1100 nm.

Gemäß Vorrichtungen nach FIG 4 kann insbesondere eine richtungsabhängige dreidimensionale oder zweieinhalbdimensionale Erfassung des Teilbereichs 8 erfolgen. Das Depth of Field kann beispielsweise vergrößert werden, um Kippungen des Abbildungsstrahls digital kompensieren zu können.

Es kann beispielsweise eine Abstandsregelung von einem Schreibkopf zur Werkstückoberfläche, beziehungsweise zum Pulverbett 1, näherungsweise in Echtzeit erfolgen.

Eine dreidimensionale thermische Erfassung des Bauteils mit oder ohne thermischer Kalibrierung ist ebenfalls möglich. Bezüglich der thermischen Erfassung und Kalibrierung wird auf die Erläuterungen zu FIG 1 bis FIG 3 verwiesen.

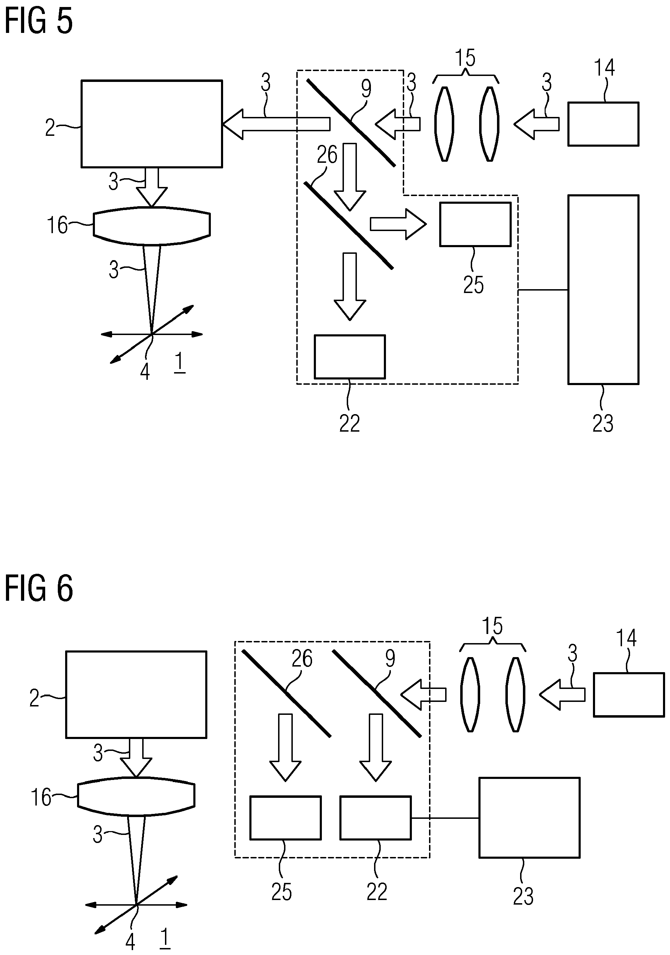

In FIG 5 ist eine schematische Darstellung einer weiteren beispielhaften Ausführungsform einer Vorrichtung gemäß dem verbesserten Konzept gezeigt. Ein grundsätzlicher Aufbau der Vorrichtung entspricht dem der Vorrichtung gemäß FIG 1 bis FIG 4.

Die Vorrichtung beinhaltet eine Kamera 25, welche beispielsweise der Lichtfeldkamera 20 entsprechen kann und/oder den Detektor 5 gemäß FIG 1 bis FIG 3 enthalten kann. Außerdem ist eine Auswerteeinheit 23 gezeigt, die mit der Kamera 25 gekoppelt ist. Die Auswerteeinheit 23 kann beispielsweise von der Kamera 25 beziehungsweise dem Detektor 5 erzeugte Detektorsignale erfassen und basierend darauf einen Fertigungsprozess für die additive Fertigung steuern.

Optional beinhaltet die Vorrichtung auch ein Spektroskop oder Spektrometer 22, welches von dem Teilbereich 8 ausgehendes Licht erfassen kann und basierend darauf Spektralsignale erzeugen und beispielsweise an die Auswerteeinheit 23 liefern kann.

FIG 6 zeigt eine weitere schematische Darstellung einer beispielhaften Ausführungsform einer Vorrichtung gemäß dem verbesserten Konzept. Die Vorrichtung der FIG 6 entspricht weitgehend der Vorrichtung aus FIG 5.

Während in FIG 5 der Strahlteiler 9 vorgesehen ist, um Licht aus dem Strahlengang des Schmelzstrahls 3 auszukoppeln und auf den weiteren Strahlteiler 26 zu lenken, der Licht zum einen an die Kamera 25 und zum anderen an das Spektroskop oder Spektrometer 22 leitet, sind in FIG 6 beide Strahlteiler 9 und 26 hintereinander im Strahlengang des Schmelzstrahls 3 angeordnet und koppeln unabhängig voneinander Licht für die Kamera 25 beziehungsweise das Spektroskop oder Spektrometer 22 aus dem Strahlengang des Schmelzstrahls 3 aus.

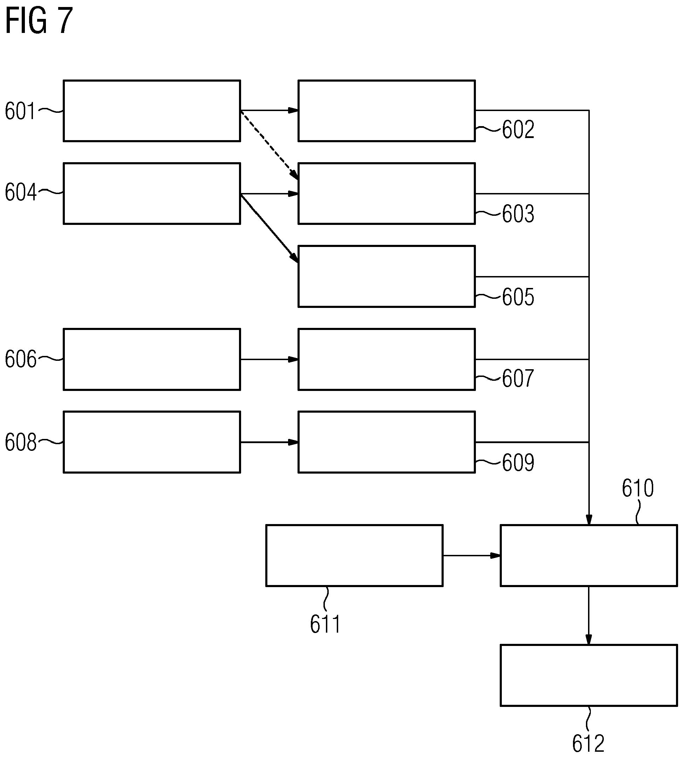

Eine Vorrichtung gemäß FIG 5 oder FIG6 kann insbesondere zur Durchführung eines Verfahrens zur Prozesssteuerung gemäß dem verbesserten Konzept eingesetzt werden, insbesondere wie es im Folgenden bezüglich der FIG 7 bis FIG 9 erläutert wird.

In FIG 7 ist ein Flussdiagramm zur schematischen Darstellung eines Verfahrens zur Prozesssteuerung gemäß dem verbesserten Konzept gezeigt. In einem Schritt 601 werden Detektorsignale von dem Detektor 5, insbesondere zweidimensionale, zweieinhalbdimensionale oder dreidimensionale Informationen über den Teilbereich 8 enthaltend, erfasst und beispielsweise an die Auswerteeinheit 23 übermittelt.

In einem Schritt 602 bestimmt die Auswerteeinheit 23 beispielsweise eine Topografie des Schreiborts 4 oder des Teilbereichs 8.

Die Informationen aus 601 werden in einem Schritt 603 gegebenenfalls verwendet um ein thermisches Profil des Schreiborts 5 oder des Teilbereichs 8 zu erstellen, beispielsweise mittels der Auswerteeinheit 23.

Optional können in einem Schritt 604 Spektralsignale von dem Spektroskop oder Spektrometer 22 an die Auswerteeinheit 23 übermittelt werden. Die Spektralsignale können beispielsweise bei der Ermittlung des thermischen Profils berücksichtigt werden.

In einem optionalen Schritt 605 bestimmt die Auswerteeinheit 23 anhand der Spektralsignale Informationen über mögliche Kontaminationen im Teilbereich 8.

In einem optionalen Schritt 606 werden Schallsignale oder akustische Signale, insbesondere Körperschallsignale, von einem Schallsensor der Vorrichtung, welcher mit dem Werkstück gekoppelt ist, an die Auswerteeinheit 23 übermittelt.

Die Auswerteeinheit 23 kann in einem optionalen Schritt 607 basierend auf den Schalldaten Informationen über das Auftreten von Rissen, Verspannungen oder Relaxationen in dem Werkstück bestimmen.

Weitere Sensoren oder Messeinrichtungen können optional in einem Schritt 608 weitere Messgrößen erfassen und an die Auswerteeinheit 23 weitergeben. Die Auswerteeinheit 23 kann in einem optionalen Schritt 609 basierend auf den weiteren Messgrößen beispielsweise abgeleiteten Prozessinformationen erzeugen.

Die in den Schritten 602, 603, 605, 607 oder 609 erzeugten Informationen, Profile, Topografien und so weiter können beispielsweise in einem Schritt 610 zur Prozesssteuerung, insbesondere zur Steuerung eines Schreibprozesses zur Fertigung des Werkstücks durch die Vorrichtung verwendet werden. Insbesondere kann die Auswerteeinheit 23 basierend auf den so erfassten Informationen und Daten optimierte Schreibdaten mit einer aktuellen Prozessinformation berechnen. Abweichungen einer Schreibbahn oder des Schreibpunkts 4 von Sollwerten können basierend auf den optimierten Schreibdaten minimiert oder kompensiert werden.

Insbesondere kann die Auswerteeinheit 23 zur Steuerung des Schreibprozesses die Heizquelle 14 und/oder die Abtasteinheit ansteuern.

Ebenfalls in Schritt 610 kann die Auswerteeinheit beispielsweise Informationen oder Statusinformationen zu potentiellen Abweichungen oder Fehlern ermitteln und beispielsweise an einen Benutzer der Vorrichtung, beispielsweise über eine Benutzerschnittstelle oder ein Anzeigegerät ausgeben.

Im Falle bestimmter gravierender Fehler, wie beispielsweise bei Toleranzüberschreitungen, schwerwiegender Kontaminationen oder dem Auftreten von Rissen im Werkstück, kann die Auswerteeinheit 23 in Schritt 610 beispielsweise auch den Schreibprozess abbrechen. Insbesondere kann die Auswerteeinheit 23 dazu die Heizquelle 14 deaktivieren.

Zum Berechnen der Schreibdaten, insbesondere der optimierten Schreibdaten zum Vornehmen weiterer bezüglich 610 beschriebener Schritte kann die Auswerteeinheit 23 beispielsweise in einem Schritt 611 auch Solldaten oder Schichtdaten zur Fertigung des Werkstücks oder beispielsweise CAD-Daten erfassen und diese bei den erforderlichen Berechnungen berücksichtigen.

In einem Schritt 612 kann die Auswerteeinheit 23 verschiedene Systemkomponenten der Vorrichtung direkt oder indirekt ansteuern um den Prozess zu steuern, beispielsweise kann die Auswerteeinheit 23 eine Beschichtungseinheit ansteuern, um beispielsweise eine Schichtdicke für eine Beschichtung nach der eigentlichen additiven Fertigung des Werkstücks zu bestimmen oder einzustellen.

Zusätzlich oder alternativ kann die Auswerteeinheit 23 beispielsweise die Heizquelle 14 derart ansteuern, dass eine Energie des Schmelzstrahls 3 verändert wird. Alternativ oder zusätzlich kann die Auswerteeinheit 23 die Abtasteinheit 2 ansteuern, um entsprechend die Abweichungen zu kompensieren oder minimieren. Alternativ oder zusätzlich kann die Auswerteeinheit 23 auch die Fokussiereinheit 16, also insbesondere die F-Theta Linse, ansteuern, um einen Fokus zu korrigieren.

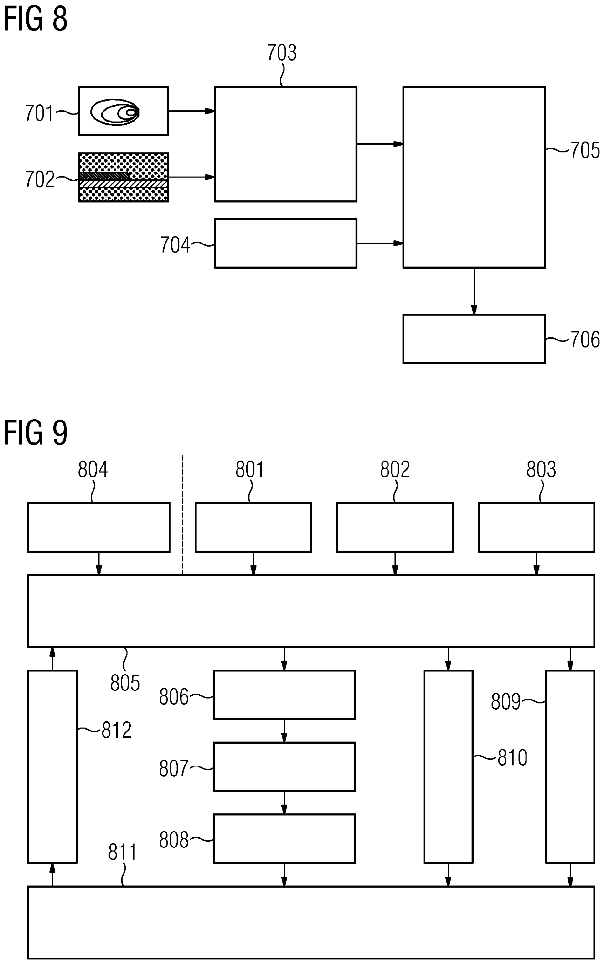

In FIG 8 ist ein Flussdiagramm einer weiteren beispielhaften Ausführungsform eines Verfahrens zur Prozesssteuerung gemäß dem verbesserten Konzept gezeigt. In einem Schritt 701 wird ein thermisches Bild beispielsweise eines Schmelzbereichs oder des Schreiborts oder des Teilbereichs 8 an die Auswerteeinheit 23 übermittelt. Optional kann in einem Schritt 702 ein Oberflächenbild, insbesondere ein zweidimensionales und/oder zweieinhalbdimensionales und/oder dreidimensionales Oberflächenbild des Pulverbetts 1 oder des Teilbereichs 8 an die Auswerteeinheit 23 übermittelt werden.

In Schritt 703 kann die Auswerteeinheit 23 beispielsweise basierend auf dem thermischen Bild ein Temperaturprofil oder Isothermen bestimmen.

Basierend auf dem Oberflächenbild kann in dem Schritt 704 die Auswerteeinheit 23 beispielsweise eine Topografieinformation des Teilbereichs 8 ermitteln und beispielsweise Löcher, Spritzer, sonstige Strukturen oder Pulverreste erkennen.

In Schritt 705 kann die Auswerteeinheit 23 beispielsweise eine erforderliche oder anzupassende Energiemenge des Schmelzstrahls 3 beispielsweise aus dem Temperaturprofil oder aus dem Oberflächenbild des Teilbereichs 8 bestimmen. Alternativ oder zusätzlich kann die Auswerteeinheit 23 auch einen Betriebsmodus der Heizquelle 14 beispielsweise zur Optimierung eines Temperaturprofils vor einem Schreiben oder ortsabhängig alternierend mit dem Schreiben bestimmen.

In einem Schritt 706 kann die Auswerteeinheit 23 beispielsweise die Heizquelle 14 und/oder die Abtasteinheit 2 und/oder die Fokussiereinheit 16 ansteuern, beispielsweise zur Anpassung des Fertigungsprozesses. Insbesondere kann die Auswerteeinheit in dem Schritt 706 zwischen verschiedenen Betriebsmodi der Vorrichtung umschalten, beispielsweise zwischen einem Heizmodus und einem Schreibmodus.

Der Schritt 705 kann auch hier beispielsweise optional durch CAD-Daten oder Schichtdaten oder Solldaten aus einem Schritt 704 unterstützt werden.

In FIG 9 ist ein Flussdiagramm einer weiteren beispielhaften Ausführungsform eines Verfahrens zur Prozesssteuerung gemäß dem verbesserten Konzept gezeigt. Ein Schritt 801 entspricht einem Schritt 701 in FIG 8. Ein Schritt 802 entspricht einem Schritt 702 in FIG 8. In einem Schritt 803 können beispielsweise weitere Daten wie Sensordaten, weitere Messgrößen, Schallsignale und/oder Spektralsignale an die Auswerteeinheit 23 übermittelt werden. Ein Schritt 804 entspricht einem Schritt 704 in FIG 8.

In einem Schritt 805 kann die Auswerteeinheit 23 Schritte, insbesondere Berechnungsschritte, für eine thermische Prozessführung durchführen. Insbesondere kann die Auswerteeinheit 23 eine dynamische Bestimmung eines oder mehrerer Prozessparameter bestimmen. Die Auswerteeinheit 23 kann beispielsweise einen von mehreren Betriebsmodi der Vorrichtung aktivieren, beispielsweise einen Schreibmodus, einen Schreib- und-Heizmodus oder einen Heizmodus.

In einem Schritt 806 kann dann die Fertigung des Werkstücks durchgeführt werden. In einem Schritt 807 kann eine Qualitätsprüfung des Werkstücks erfolgen. In einem Schritt 808 können beispielsweise Abweichungen von Istwerten des Werkstücks von Sollwerten bestimmt werden und/oder Defekte des Werkstücks bestimmt werden.

In einem optionalen Schritt 809 können beispielsweise Daten aus fertigungsbegleitenden Messungen bereitgestellt werden. In einem optionalen Schritt 810 können Fertigungsparameter bereitgestellt werden.

In einem Schritt 811 kann die Auswerteeinheit beispielsweise basierend auf den in Schritt 808 bestimmten Abweichungen oder Defekten und optional aus den Daten aus 809 und den Parametern aus 810 eine Optimierung des Modells für eine dynamische Bestimmung von Prozessparametern durchführen. Insbesondere können Strukturelemente und/oder Morphologien bestimmt werden. Die Anpassung des Modells kann insbesondere bauteilspezifisch oder bereichsspezifisch erfolgen.

In einem Rückkopplungschritt 812 kann das optimierte angepasste Modell beispielsweise für eine zukünftige Fertigung eines weiteren Werkstücks, in der thermischen Prozessführung berücksichtigt werden.

In einem Verfahren zur Prozessteuerung gemäß dem verbesserten Konzept kann vorgesehen sein, dass die Signale weiterer, bisher nicht erwähnter Sensoren oder auch Steuerungs- oder Positionierungssignale beziehungsweise Informationen in eine Verarbeitung der jeweiligen Messdaten im Sinne einer Prozessregelung eingehen.

Eine Prozessregelung nach dem verbesserten Konzept nutzt diese Informationen über den Schreibprozess oder das Werkstück selbst, um den Schreibprozess derart zu regeln, dass die maßlichen Toleranzen des Werkstücks minimiert werden und zudem beispielsweise auch eine thermische Last und/oder Temperaturgradienten in dem Bauteil minimiert oder möglichst stabil und kontrolliert gehalten werden. Dadurch können vorteilhaft Verspannungen im Werkstück minimiert werden.

Messungen mit weiteren Sensoren dienen beispielsweise auch einer noch vollständigeren Erfassung des Schreibprozesses auf weitere die Qualität des Werkstücks beeinflussende Parameter und Größen. Beispielsweise ist hier die Schallmessung beschrieben.

Die Prozesssteuerung gemäß dem verbesserten Konzept erlaubt eine präzisere Nutzung der vorliegenden Informationen, um das Fertigungsergebnis zu verbessern. Die Prozesssteuerung kann beispielsweise geometrische Informationen aus den Abbildungen des Teilbereichs 8 übernehmen, um beispielsweise eine Fokuslage beziehungsweise eine Höhenpositionierung im Prozess zu überwachen und zu regeln. Über die Höhenregelung kann indirekt beispielsweise auch eine Tiefenwirkung des Schreibprozesses beeinflusst werden. So können beispielsweise komplexere Strukturen, wie Überstände oder Hinterschnitte, die in typischen Werkstücken auftreten können, mit höherer Präzision gefertigt werden.

Die Schichtdicke der nächsten Lage oder Schicht kann derart eingestellt werden, dass beispielsweise Fehlstellen der aktuellen Lage sicher aufgefüllt werden können oder vorstehende Teile nicht mit dem Beschichtungsprozess kollidieren oder störend wirken. Typischerweise können sich solche Störungen über mehrere Lagen aufbauen, bevor es zu Störungen im Prozess kommt. Derartige Störungen können mit einer frühzeitigen Korrektur beziehungsweise Gegenmaßnahme dann so abgefangen werden, dass Prozessstörungen vermieden werden.

Eine Heizleistung beziehungsweise ein Energieeintrag oder eine Laserleistung kann derart geregelt werden, insbesondere des Schmelzstrahl 3, dass der Schreibpunkt 4 eine gewünschte laterale Ausdehnung hat. Beispielweise kann so in dem Werkstück und innerhalb einer Lage mit unterschiedlich großen Schreibpunkten 4 kontrolliert gearbeitet werden, um das Fertigungsergebnis zu optimieren.

Eine geometrische Führung des Schmelzstrahls 3 kann beispielsweise derart überwacht werden, dass geometrische Verzeichnungen im Fertigungsprozess online korrigiert werden können. Möglichkeiten zur geometrischen Schmelzstrahlführung über eine zweidimensionale oder dreidimensionale Erfassung des Teilbereichs 8 sind beschrieben.

Ferner kann auch eine Lage und Größe von Strukturen oder benachbarten Schreibbahnen bestimmt und zur Prozesssteuerung berücksichtigt werden.

Die Prozesssteuerung greift beispielsweise auch auf die thermischen oder spektroskopischen Informationen und Signale zurück, beispielsweise, um eine möglichst homogene oder stabile Temperatur im Schreibbereich zu erreichen, thermische Gradienten zu minimieren und/oder ein Tiefenprofil für lokale Wärmeeinbringung und deren Ableitung zu erstellen. Ferner können Materialveränderungen erkannt werden, beispielsweise eine Oxidation aus einer früheren Überhitzung. Schließlich können auch Fremdmaterialien detektiert werden.

Weitere Sensorinformationen, beispielsweise Schallsignale, können beispielsweise berücksichtigt werden, um Rissbildungen zu detektieren oder Spritzer zu detektieren und/oder weitere fertigungsrelevante oder prozessrelevante Parameter zu bestimmen.

Die Prozesssteuerung verwendet die genannten Informationen und gegebenenfalls weitere Informationen aus Maschinen und/oder materialspezifischen Vorgaben oder auch Geometrieinformationen, beispielsweise aus CAD-Daten, um mit deterministischen und/oder gelernten Bewertungen und/oder Modellierungen eine optimierte Prozessführung zu ermöglichen.

Gemäß der vorgeschlagenen Prozesssteuerung können gesammelte Informationen aus dem Fertigungsablauf für das gesamte Werkstück oder auch für Teilbereiche eines Werkstücks detailliert analysiert werden, beispielsweise, um die Prozessführung weiter zu optimieren, etwa für weitere gleichartige Teile oder auch für modulare oder wiederkehrende Strukturelemente bei neuen oder vergleichbaren Werkstücken.

Eine Analyse beispielsweise betreffen Rissbildung oder Materialveränderung oder sonstige Qualitätskriterien oder Materialkontaminationen kann neben der Analyse rein geometrischer Abweichungen genutzt werden, um einen laufenden Fertigungsauftrag anzuhalten oder abzubrechen, sobald beispielsweise zu erwarten oder zu erkennen ist, dass das gefertigte Werkstück bestehende Qualitätskriterien nicht mehr erfüllen kann.

Wenn der Schreibprozess angehalten wurde, kann gemäß der Prozesssteuerung beispielsweise auch ein ein- oder mehrstufiger Aufwärmprozess gefahren werden, wobei mittels des Schmelzstrahls 3 beispielsweise nur das Werkstück mit ansteigender Leistung sukzessive aufgeheizt wird, bis eine für einen stabilen Schreibprozess günstige Temperaturverteilung und ein entsprechendes Abkühlverhalten erreicht ist.

Diese Methode kann bevorzugt auch verwendet werden, wenn hybride Fertigungsverfahren zum Einsatz kommen, beispielsweise wenn auf ein bestehendes Teil oder Halbzeug ein weiteres Teil mit dem additiven Fertigungsverfahren angebaut oder in einem stabilen Materialverbund angefertigt werden soll. Solche Szenarien können bei der Reparatur und Instandhaltung auftreten, wo Bereiche durch Abnutzung geschädigt oder im Reparaturprozess abgetragen wurden, und diese nachgefertigt werden soll.

Ebenso können typischerweise einfache Halbzeuge mit klassischen Fertigungsverfahren wie Gießen, Schmieden, Drehen, Fräsen, Pressen in diversen Ausprägungen mit einem seriellen additiven Verfahren kombiniert werden.

Mit einer Prozesssteuerung gemäß dem verbesserten Konzept, insbesondere mittels der kontrollierten und gesteuerten Vorwärmung, können insbesondere filigranere oder individuellere Teilbereiche an ein vorgefertigtes Halbzeug angefügt werden.

## Patentansprüche

1. Vorrichtung zur additiven Fertigung eines Werkstücks, die Vorrichtung aufweisend
- eine Abtasteinheit (2), die dazu eingerichtet ist, einen Schmelzstrahl (3) auf einen Schreibpunkt (4) auf einer Schreibfläche (1) zu lenken, einen optischen Detektor (5), eine Steuereinheit (6) und eine Abbildungseinheit (7); **gekennzeichnet dadurch, dass**
- der Detektor (5) als ortsauflösender Detektor ausgebildet ist;
- die Abbildungseinheit (7) dazu eingerichtet und angeordnet ist, einen Teilbereich (8) der Schreibfläche (1) wenigstens zweidimensional mittels des Detektors (5) abzubilden; und
- die Steuereinheit (6) dazu eingerichtet ist, die Vorrichtung anzusteuern, um eine Position des Teilbereichs (8) während der Fertigung zu verändern.

2. Vorrichtung nach Anspruch 1, wobei die Abbildungseinheit (2) einen Strahlteiler (9) aufweist, der auf einer Eingangsseite der Abtasteinheit (2) in einem Strahlengang des Schmelzstrahls (3) angeordnet ist.

3. Vorrichtung nach einem der Ansprüche 1 oder 2, wobei die Abbildungseinheit (2) einen Aktuator enthält, der dazu eingerichtet ist, zum Abbilden des Teilbereichs (8) den Detektor (5) und/oder ein Objektiv (10) der Abbildungseinheit (7) entsprechend einer Ablenkung des Schmelzstrahls (3) durch die Abtasteinheit (2) nachzuführen.

4. Vorrichtung nach einem der Ansprüche 1 bis 3, außerdem aufweisend eine Beleuchtungseinrichtung (11), dazu eingerichtet, den Teilbereich (8) wenigstens teilweise zu beleuchten.

5. Vorrichtung nach Anspruch 4, wobei wenigstens eine Lichtquelle (13) der Beleuchtungseinrichtung (11) angeordnet und eingerichtet ist, Licht für die Beleuchtung auf einer Eingangsseite der Abtasteinheit (2) in einen Strahlengang des Schmelzstrahls (3) einzukoppeln.

6. Vorrichtung nach einem der Ansprüche 4 oder 5, wobei wenigstens eine weitere Lichtquelle (19, 19') der Beleuchtungseinrichtung (11) zwischen der Abtasteinheit (2) und der Schreibfläche (1) angeordnet ist.

7. Vorrichtung nach einem der Ansprüche 1 bis 6, wobei
- der Detektor (5) dazu eingerichtet ist, basierend auf dem Abbild des Teilbereichs (8) wenigstens ein Detektorsignal zu erzeugen;
- die Vorrichtung eine Auswerteeinheit (23) zur Auswertung und/oder Verarbeitung des wenigstens einen Detektorsignals aufweist.

8. Vorrichtung nach Anspruch 7, wobei die Auswerteeinheit (23) dazu eingerichtet ist, basierend auf dem wenigstens einen Detektorsignal wenigstens eine thermische Kenngröße des Teilbereichs (8) zu ermitteln.

9. Vorrichtung nach einem der Ansprüche 7 oder 8, die eine Lichtfeldkamera (20) aufweist, welche den Detektor (5) beinhaltet.

10. Vorrichtung nach Anspruch 9, wobei die Auswerteeinheit (23) dazu eingerichtet ist, basierend auf dem wenigstens einen Detektorsignal eine topographische Information des Teilbereichs (8) zu bestimmen.

11. Vorrichtung nach einem der Ansprüche 9 oder 10, wobei die Auswerteeinheit (2) dazu eingerichtet ist, basierend auf dem wenigstens einen Detektorsignal eine Auslenkposition des Schmelzstrahls (3) zu bestimmen.

12. Vorrichtung nach einem der Ansprüche 1 bis 11, die
- ein Spektroskop und/oder ein Spektrometer (22) aufweist, das dazu eingerichtet und angeordnet ist, von der Schreibfläche (1) ausgehendes Licht zu erfassen und basierend darauf ein Spektrometersignal zu erzeugen, welches spektrometrische oder spektroskopische Informationen über das Licht beinhaltet; und/oder
- einen oder mehrere Schallsensoren beinhaltet, wobei der Schallsensor mit dem Werkstück gekoppelt werden kann.

13. Verfahren zur Überwachung einer additiven Fertigung eines Werkstücks, wobei für die Fertigung ein Schmelzstrahl (3) auf einen Schreibpunkt (4) auf einer Schreibfläche (1) gelenkt wird,
das Verfahren **gekennzeichnet durch** folgende Schritte:
- Aufnehmen eines wenigstens zweidimensionalen ortsaufgelösten Abbilds eines Teilbereichs (8) der Schreibfläche (1), wobei eine Position des Teilbereichs (8) während der Fertigung verändert wird;
- Erzeugen wenigstens eines Detektorsignals basierend auf dem Abbild; und
- Überwachen der Fertigung basierend auf dem wenigstens einen Detektorsignal.

14. Verfahren zur Prozessregelung einer additiven Fertigung eines Werkstücks, aufweisend folgende Schritte:
- Überwachen der Fertigung gemäß einem Verfahren nach Anspruch 13;
- Ermitteln wenigstens einer thermischen Kenngröße des Teilbereichs (8) basierend auf dem wenigstens einen Detektorsignal; und
- Festlegen oder Verändern wenigstens eines Prozessparameters für die Fertigung abhängig von der wenigstens einen thermischen Kenngröße.

15. Verfahren nach Anspruch 14, wobei
- ein Schallsignal von einem mit dem Werkstück gekoppelten Schallsensor erfasst wird und das Festlegen oder Verändern des wenigstens einen Prozessparameters abhängig von dem Schallsignal durchgeführt wird; und/oder
- ein Spektrometersignal basierend auf von der Schreibfläche (1) ausgehendem Licht erzeugt wird und das Festlegen oder Verändern des wenigstens einen Prozessparameters abhängig von dem Spektrometersignal durchgeführt wird.

16. Computerprogramm mit Befehlen, welche bei Ausführung des Computerprogramms durch ein Computersystem eine Vorrichtung nach einem der Ansprüche 1 bis 12 dazu veranlassen, ein Verfahren gemäß einem der Ansprüche 13 bis 15 durchzuführen.
